(19) Europäisches Patentamt
European Patent Office
Office européen des brevets

(11) EP 1 887 498 A1

(12) EUROPEAN PATENT APPLICATION

(43) Date of publication:
13.02.2008 Bulletin 2008/07

(51) Int Cl.:
*G06Q 10/00* (2006.01)

(21) Application number: 06015914.2

(22) Date of filing: 31.07.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: Accenture Global Services GmbH
8200 Schaffhausen (CH)

(72) Inventors:
• Yurekli, Savas
26020 Eskisehir (TR)

• Heath, Geremy
NSW, Australia 2095 (AU)
• Easton, Robert
Farnham, Surrey GU10 1NQ (GB)

(74) Representative: Müller-Boré & Partner
Patentanwälte
Grafinger Strasse 2
81671 München (DE)

(54) **Work allocation model**

(57) The invention refers to a computer-implemented method, a computer program product and a system for allocating processes (118) to a plurality of resources (106), where the method comprises the steps of: receiving a process specification defining a plurality of processes, each process having a weighting parameter (102) and comprising at least one task belonging to a task category; analyzing an available resource capacity (104) for each of a plurality of resources, each of which is capable of performing tasks within at least one task category; establishing a first resource-task assignment set (112) defining an assignment of the plurality of tasks to the plurality of resources depending on the task categories, where the first resource-task assignment set defines a first scheduling of the tasks depending on the available resource capacities, and evaluating for each of the processes a first schedule parameter (114) depending on the established scheduling of the tasks belonging to the respective process; establishing at least one further resource-task assignment set an assignment of the plurality of tasks to the plurality of resources depending on the task categories, where the at least one further resource-task assignment set defines at least one further scheduling of the tasks depending on the available resource capacities, and evaluating for each of the processes at least one further schedule parameter depending on the established scheduling of the tasks belonging to the respective process; evaluating a control parameter (116) for each of the established resource-task assignment sets depending on the weighting parameters and the schedule parameters; selecting one of the established resource-task assignment sets depending on a selection criterion for the control parameter; and allocating the tasks to the resources according to the selected resource-task assignment set.

FIG 3

**EP 1 887 498 A1**

**Description**

FIELD OF THE INVENTION

The present invention refers to a method, a computer-program product and a system for allocating processes to a plurality of resources.

BACKGROUND OF THE INVENTION

In the manufacturing industry and particularly in connection with large production plants having a plurality of manufacturing machines each of which performs certain tasks in a production process, controlling the scheduling and the allocation of individual processes is often a critical task for insuring a smooth and efficient production flow. In particular, when articles are manufactured as individual modules, and where the design and amount of required articles or modules are frequently changed, as in customized processes for manufacturing customized articles, for example, controlling the scheduling of complex individual production processes is often difficult. In particular for a plurality of processes requiring large resource capacities and a plurality of different resource capabilities, focussing on one or more prioritized processes or resources often results in an undesirable idle time of other resources.

Similar problems also occur in the service sector and in computer-implemented processes, particularly when performed on complex computer systems comprising distributed computers. For example, in cases where a plurality of computer-implemented processes requires a plurality of different resources with a plurality of different resource categories, it is necessary to provide a reliable and efficient controlling of the allocation, i.e. a distribution, of the processes to the resources. For example, in a computer system some resources may provide the required storage capacities for storing and handling large amounts of data. Other resource may provide large computation power for performing demanding numerical operations or may provide a required 3D graphical processing or fast data retrieval from databases of from input devices, such as measurement units.

It is the object of the present invention to provide a method, a computer program product, and a system for allocating processes to a plurality of resources which is easy to use and which provides an improved utilization of the resources and an improved throughput adaptable to the specific needs of the user, in particular taking into account their technical compatibility.

This object is solved by a method, a computer-program product and a system having the features defined in claims 1, 11, and 12, respectively. Preferred embodiments are defined in the dependent subclaims.

SUMMARY

Accordingly, in one aspect the invention provides a computer-implemented method for allocating processes to a plurality of resources, the method comprising the steps of:

- receiving a process specification defining a plurality of processes, each process having a weighting parameter and comprising at least one task belonging to a task category;
- analyzing an available resource capacity for each of a plurality of resources each of which is capable of performing tasks within at least one task category;
- establishing a first resource-task assignment set defining an assignment of the plurality of tasks to the plurality of resources depending on the task categories, where the first resource-task assignment set defines a first scheduling of the tasks depending on the available resource capacities, and evaluating for each of the processes a first schedule parameter depending on the established scheduling of the tasks belonging to the respective process;
- establishing at least one further resource-task assignment set defining an assignment of the plurality of tasks to the plurality of resources depending on the task categories, where the at least one further resource-task assignment set defines at least one further scheduling of the tasks depending on the available resource capacities, and evaluating for each of the processes at least one further schedule parameter depending on the established scheduling of the tasks belonging to the respective process;
- evaluating a control parameter for each of the established resource-task assignment sets depending on the weighting parameters and the schedule parameters;
- selecting one of the established resource-task assignment sets depending on a selection criterion for the control parameter; and
- allocating the tasks to the resources according to the selected resource-task assignment set.

Accordingly, with a method of the present invention the scheduling of processes in particular in connection with a complex system of a plurality of resource can be significantly simplified. Moreover, with the definition of the weighting

2

parameters according to the required conditions and the selection of the control parameter according to the particular requirements the utilization of resources, such as production machines, and the throughput for processes, such as the production of articles, can be easily improved. Preferably, the method represents an automatic allocation of processes to a plurality of resources. Preferably, the step of establishing at least one further resource-task assignment set is repeated until a at least relative, preferably absolute maximum of the control parameter is achieved.

At least part of the process specification may be inputted to a system via a user interface. Alternatively or additionally at least part of the process specification may be received from a database storing a plurality of process specifications. In a preferred embodiment, the plurality of processes may be identified by process identification numbers that may be received via a user interface and the detailed process specification for each process may be retrieved from the database depending on the respective process identification number. The process specification for each process may comprise at least part of the weighting parameter for the process. Preferably, the weighting parameter is an internal parameter. This internal weighting parameter is, preferably, used for internal processing, such as ranking the processes and is, preferably, not made visible to the user.

Preferably, not each of the resources is capable of performing each of the tasks.

In a preferred embodiment the process specification comprises for at least one task a capacity requirement parameter defining a required resource capacity for carrying out the task and a time frame parameter defining a period of minimum time required for carrying out the task and where in the steps of establishing a resource-task assignment set the tasks are scheduled depending on the task capacity requirement parameter and the time frame parameter. The standard capacity requirement may represent processing time or standard processing time for performing the task.

Preferably, the time frame parameter defines a plurality of time frame periods and/or time slots within each of which a minimum portion of a total processing time has to be carried out.

Preferably, receiving a process specification comprises receiving for each process a process volume parameter and an efficiency parameter, wherein the method further comprises a step of evaluating the weighting parameter for each of the processes based on the process volume parameter and the efficiency parameter. Preferably, receiving the efficiency parameter comprises receiving a process category and retrieving the efficiency parameter depending on the received process category. The efficiency parameter may be retrieved from a database.

Preferably, the method further comprises:

- ordering the processes depending on the weighting parameter;
- assigning to each process a ranking parameter depending on the ordering;
- receiving for at least one selected process a modification of the ranking parameter;
- modifying the weighting parameter of the selected process depending on the weighting parameter of at least one other process.

Preferably the weighting parameter of the selected process is modified depending on the weighting parameters of the processes having ranking parameters adjacent to the modified ranking parameter. The modification of the weighting parameter may be performed automatically. Preferably, the method comprises a step of ordering the processes depending on the process volume parameter and/or a process criticality parameter.

Preferably, the received process specification comprises for at least one of the tasks a dependency parameter defining a dependency of this task on at least one other task within the same process. Preferably, the dependency parameter comprises at least one task identification number identifying a task within the same process, where the identified task has to be completed and/or started before the task having the dependency parameter assigned to is started and/or completed. Most preferably, the at least one task identification number identifies a task that has to be completed before the task having the dependency parameter assigned to this task is can be started.

Preferably, the schedule parameter is evaluated based on the scheduled ending time for the last task within each process and/or the starting time for the first task within each process.

In a preferred embodiment evaluating a control parameter for an established resource-task assignment set comprises:

- evaluating for each of the processes scheduled in the resource-task assignment set a process assessment value depending on the schedule parameter and the weighting parameter assigned to the process, and
- summing up the process assessment values of all processes scheduled in the resource-task assignment set. This sum preferably represents the control parameter for the resource-task assignment set.

Preferably, the method further comprises steps of establishing a first resource ordering and a second resource ordering different from the first resource ordering, and wherein the step of establishing the first resource-task assignment set comprises successively assigning the tasks to the resources following the first resource ordering, and the step of establishing the second resource-task assignment set comprises successively assigning the tasks to the resources following the second resource ordering.

The method, preferably, further comprises controlling the operation of at least part of the resources according to the scheduling of the tasks in the selected resource-task assignment set.

In a further aspect the present invention provides a computer-program product, which is preferably embodied in a computer readable medium, comprising program code which when loaded in a computer system causes the computer system to perform operations of a method according to the present invention or a preferred embodiment thereof.

In a further aspect, the present invention provides a system for allocating processes to a plurality of resources, preferably using a method according to the present invention or a preferred embodiment thereof, the system comprising:

- a process specification interface for receiving a process specification that defines a plurality of processes, each process having a weighting parameter and comprising at least one task belonging to a task category;
- a capacity analysis module for analyzing an available resource capacity for each of a plurality of resources each of which is capable of performing tasks within at least one task category;
- a resource-task assignment module for establishing at least a first and a second resource-task assignment set each defining an assignment of the plurality of tasks to the plurality of resources depending on the task categories, where the first resource-task assignment set defines a first scheduling of the tasks depending on the available resource capacities and the second resource-task assignment set defines a second scheduling of the tasks depending on the available resource capacities;
- a schedule evaluation module for evaluating for each process

     -- a first schedule parameter depending on the first established scheduling of the tasks belonging to the respective process; and
     -- a second schedule parameter depending on the second established scheduling of the tasks belonging to the respective process;

- a control module evaluating a control parameter for each of the established resource-task assignment sets depending on the weighting parameters and the schedule parameters;
- a selection module for selecting one of the established resource-task assignment sets depending on a selection criterion for the control parameter; and
- an allocation module for allocating the tasks to the resources according to the selected resource-task assignment set.

Preferably, the system comprises modules for performing operations of a method according to the present invention or a preferred embodiment thereof. The system preferably comprises a time entry module for receiving hours and/or Estimated Date of Completions and/or Estimated Time of Completion from at least one resource, preferably from a plurality of resources.

These and other objects, features and advantages of the present invention will become more apparent upon reading of the following detailed description of preferred embodiments and accompanying drawings. It should be understood that even though embodiments are separately described, single features thereof may be combined to additional embodiments.

Fig. 1:         shows an exemplary system for implementing the present invention or a preferred embodiment thereof;
Fig. 2:         shows a flow diagram representing a method according to a preferred embodiment of the present invention;
Fig. 3:         shows a flow diagram presenting details of a particular aspect of the method shown in Fig. 2 according to a preferred embodiment of the present invention;
Figs. 4A, 4B:   show schematics of task dependencies and an assignment of task levels to tasks;
Fig. 5:         shows a flow diagram representing a method according to a preferred embodiment of the present invention;
Fig. 6:         shows a flow diagram presenting details of a particular aspect of the method shown in Fig. 5 according to a preferred embodiment of the present invention; and
Fig. 7:         shows a flow diagram presenting details of a particular aspect of the method shown in Fig. 6 according to a preferred embodiment of the present invention.

DETAILED DESCRIPTION

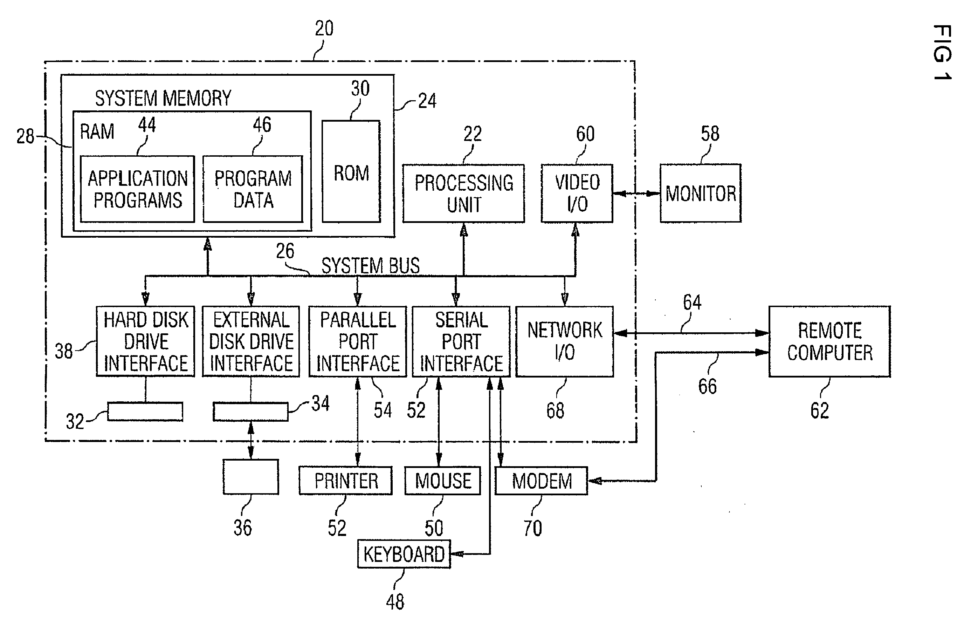

With reference to **Fig. 1**, an exemplary system for implementing the invention includes a general purpose computing device in the form of a conventional computing environment 20 (e.g. personal computer), including a processing unit 22, a system memory 24, and a system bus 26, that couples various system components including the system memory 24 to the processing unit 22. The processing unit 22 may perform arithmetic, logic and/or control operations by accessing system memory 24. The system memory 24 may store information and/or instructions for use in combination with processing unit 22. The system memory 24 may include volatile and non-volatile memory, such as random access memory (RAM) 28 and read only memory (ROM) 30. A basic input/output system (BIOS) containing the basic routines that helps to transfer information between elements within the personal computer 20, such as during start-up, may be stored in ROM 30. The system bus 26 may be any of several types of bus structures including a memory bus or memory controller, a peripheral bus, and a local bus using any of a variety of bus architectures.

The personal computer 20 may further include a hard disk drive 32 for reading from and writing to a hard disk (not shown), and an external disk drive 34 for reading from or writing to a removable disk 36. The removable disk may be a magnetic disk for a magnetic disk driver or an optical disk such as a CD ROM for an optical disk drive. The hard disk drive 34 and external disk drive 34 are connected to the system bus 26 by a hard disk drive interface 38 and an external disk drive interface 40, respectively. The drives and their associated computer-readable media provide nonvolatile storage of computer readable instructions, data structures, program modules and other data for the personal computer 20. The data structures may include relevant data of the implementation of the resource allocation method, as described in more details below. The relevant data may be organized in a database, for example a relational or object database.

Although the exemplary environment described herein employs a hard disk (not shown) and an external disk 42, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

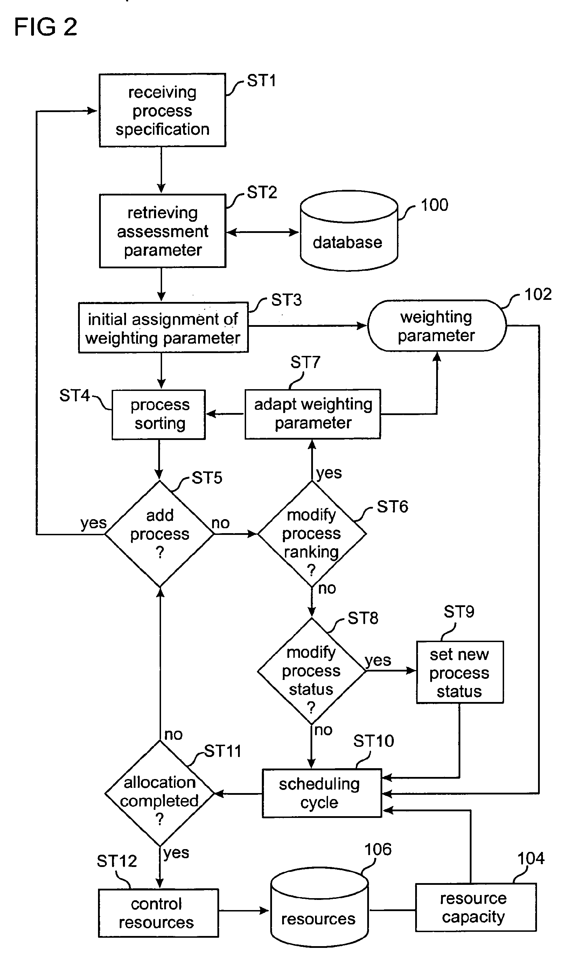

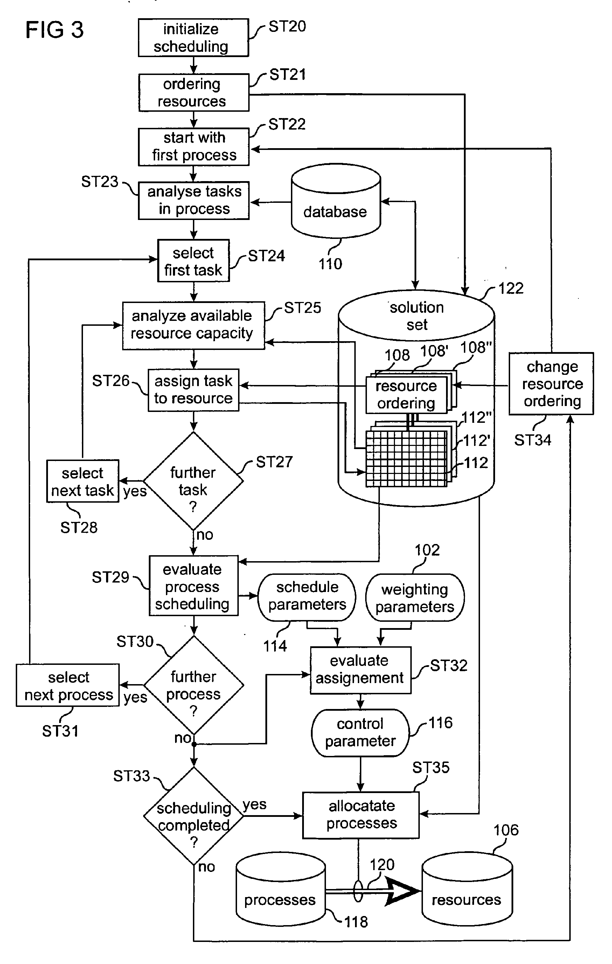

A number of program modules may be stored on the hard disk, external disk 42, ROM 30 or RAM 28, including an operating system (not shown), one or more application programs 44, other program modules (not shown), and program data 46. The application programs may include at least a part of the functionality as detailed in **Figs. 2** and **3**.

A user may enter commands and information, as discussed below, into the personal computer 20 through input devices such as keyboard 48 and mouse 50. Other input devices (not shown) may include a microphone (or other sensors), joystick, game pad, scanner, or the like. These and other input devices may be connected to the processing unit 22 through a serial port interface 52 that is coupled to the system bus 26, or may be collected by other interfaces, such as a parallel port interface 54, game port or a universal serial bus (USB). Further, information may be printed using printer 56. The printer 56, and other parallel input/output devices may be connected to the processing unit 22 through parallel port interface 54. A monitor 58 or other type of display device is also connected to the system bus 26 via an interface, such as a video input/output 60. In addition to the monitor, computing environment 20 may include other peripheral output devices (not shown), such as speakers or other audible output.

The computing environment 20 may communicate with other electronic devices such as a computer, telephone (wired or wireless), personal digital assistant, television, or the like. To communicate, the computer environment 20 may operate in a networked environment using connections to one or more electronic devices. **Fig. 1** depicts the computer environment networked with remote computer 62. The remote computer 62 may be another computing environment such as a server, a router, a network PC, a peer device or other common network node, and may include many or all of the elements described above relative to the computing environment 20. The logical connections depicted in **Fig. 1** include a local area network (LAN) 64 and a wide area network (WAN) 66. Such networking environments are commonplace in offices, enterprise-wide computer networks, intranets and the Internet.

When used in a LAN networking environment, the computing environment 20 may be connected to the LAN 64 through a network I/O 68. When used in a WAN networking environment, the computing environment 20 may include a modem 70 or other means for establishing communications over the WAN 66. The modem 70, which may be internal or external to computing environment 20, is connected to the system bus 26 via the serial port interface 52. In a networked environment, program modules depicted relative to the computing environment 20, or portions thereof, may be stored in a remote memory storage device resident on or accessible to remote computer 62. Furthermore other data relevant to the application of the insurance claim management evaluation method (described in more detail further below) may be resident on or accessible via the remote computer 62. The data may be stored for example in an object or a relation database. It will be appreciated that the network connections shown are exemplary and other means of establishing a communications link between the electronic devices may be used.

The above-described computing system is only one example of the type of computing system that may be used to implement the method for allocating a plurality of processes to a plurality of resources.

With reference to the flow diagram shown in **Fig. 2,** a method for allocating processes to a plurality of resources according to a preferred embodiment of the present invention is described. In a first step ST1 process specification is received from a database, a user interface or the like. The process specification preferably defines at least one process, more preferably a plurality of processes, such as production processes to be carried out at a production plant of a car manufacturer. At least some of the processes may be production processes for a particular vehicle or a component thereof. Alternatively or additionally at least some of the processes may represent service and/or repair orders for vehicles or components thereof. At least some of the processes may be standard production processes within an assembly line. Other processes may represent customer orders, spare part deliveries of subassembly delivery.

Each process comprises at least one task, wherein each task belongs to a task category. Preferably, at least some of the processes comprise a plurality of tasks. A process for producing a mudguard for a car, for example, comprises a plurality of tasks, such as cutting and/or punching metal, bending/folding the metal to specific shape, drilling or punching holes for passing wire through the holes or for screwing additional components to the mudguard, welding, painting, etc.. Each task belongs to a task category, such as drilling, milling, bending, welding, cutting metal up to a predetermined thickness, cutting metal thicker than said predetermined thickness, punching, cleaning, painting, gluing, assembly, simulation, crash test, wind tunnel test, etc.. Preferably, at least some of the tasks are at least partly carried out by a machine, particularly a robot and/or a computer. Other tasks may be carried out by a worker who may preferably operate a machine, such as a drill, a polishing machine, a computer, etc.. Each of the individual machine, robot, computer, workplace, etc. may represent a resource for carrying out at least one particular category of tasks.

Each of the resources has a resource capacity for performing tasks within at least one category. The resource capacity may be defined in terms of a maximum task extent that can be performed by the resource per time unit, such as drill holes per minute, meters of welding seam per hour, or square meter of paining per hour, etc.. At least some of the resources may have a standard use time, such as 12 or 24 hours per day, a certain number of days per week, or 60 minutes per hour, for example. Preferably, at least some of the resources further have a non-scheduled time reserve parameter, preferably defined in terms of a percentage of the standard use time, such as 20%, for example. A non-scheduled time reserve defined for a resource may be used to reserve time for maintenance and servicing of the resource and/or for performing additional non-scheduled tasks. Preferably, the standard use time and the non-scheduled time reserve parameter for a resource are at least partially stored in a database and/or entered by a user. Stored data may also be edited by a user.

Preferably, for at least some of the tasks the process specification received from a user or retrieved from a database defines a processing time, where the processing time of a task preferably defines the total time during which the respective resource is in use and/or occupied for carrying out this task. The processing time may be defined in a capacity requirement parameter assigned to the task. In a preferred embodiment a standard processing time for one or more tasks is stored in a database and/or entered by a user. Alternatively or additionally a task volume parameter may be defined for at least some of the tasks, where the task volume parameter defines an extent of the task, such as how may holes have to be drilled, how large is the area to be painted, etc. Preferably, the processing time for a task is determined depending on the task volume parameter, where, preferably, a resource capacity for a particular resource is considered and/or a standard resource capacity value is used for determining a processing time and/or a standard processing time respectively.

For at least some of the tasks a time frame parameter may be defined. At least some of the tasks are not sufficiently defined by processing time but may require additional time to be carried out. For example, painting requires time for drying the paint in addition to the mere painting process. In particular, in case the painting task requires several layers of paint, there may be required a considerable amount of time for drying the individual layers, where the painting resource is not directly used for this painting task and may be used for different tasks which may even belong to different processes. Accordingly, at least some of the tasks have a time frame parameter assigned to the task, where the time frame parameter defines the minimum time need for completing the task, including the processing time and additionally required idle time, for example. Accordingly, for at least some of the tasks preferably two time parameters are defined, namely the processing time and the time frame parameter. Preferably, the time frame parameter defines a division of the total time enclosed by the time frame parameter, i.e. the time frame parameter preferably defines a plurality of periods of time or time intervals or time slots. For example, the time frame parameter may define 3 hours, where each hour is considered as a separate time frame interval (time slot) although the 3 hours may be scheduled directly in succession. For other tasks, time frame intervals (time slots), for example, of minutes, days, or weeks may be defined. In another preferred embodiment an arbitrary period of time may be defined as a time frame interval (time slot). In one preferred embodiment the same time frame interval is used for all tasks within all processes. The time frame parameter may define the minimum number of time frame intervals among which the total processing time for the respective task should be distributed. When carrying out a task the processing time is preferably distributed within the time frame intervals, or may even extend beyond the time frame intervals. Preferably, a minimum and a maximum of processing time to be assigned to a single time frame interval (time slot) are determined. In a preferred embodiment said minimal and maximal value may be determined by calculating the ratio between the processing time and the number of time frame intervals, i.e. by determining the mean value of processing time per time frame interval and adding or subtracting a certain percentage thereof, respectively. Accordingly, the minimum processing time to be assigned to a single time frame interval may be set to 50% of the mean value, where the maximum value may be set to 150% of the mean value. This preferably enables the resources to perform multiple tasks in a time frame interval.

Within a process, preferably, at least some of the tasks depend on each other, i.e. one task may technically require to be carried out before other tasks. For example, welding is preferably carried out before painting. Preferably, the process specification defines the composition of the processes from the tasks. Further preferably, the process specification defines a dependency of the tasks from each other, i.e. it preferably defines for each task which other tasks have to be carried out before this task. This dependency specification is preferably defined in a dependency parameter assigned to at least some of the tasks, more preferably to each of the tasks.

Preferably, at least some of the tasks are carried out at different locations than the other tasks. For example, simulation may be carried out on a remote computer system and painting may be carried out at a paint shop located remote from a welding robot. Accordingly, the resources are preferably distributed. Preferably the resources are connected with each other and/or to a resource control unit via a network such as the networks exemplary described in connection with **Fig. 1.** The resource control unit preferably receives the process specification in step ST1.

In a preferred embodiment the process specification is associated or comprises for at least some of the processes, preferably for each of the processes, a process identification parameter (Process ID), where a detailed definition or specification of the process identified by the process identification parameter is stored in a database 100. The process specification may further comprise a weighting parameter for each of the processes. In the preferred embodiment the database 100 stores an assessment parameter for each of the processes, which is retrieved from the database 100 in step ST2. Alternatively, the assessment parameter for at least part of the processes may be received from a user together with the process identification parameter (Process ID). The assessment parameter preferably defines an effective extent with respect to a required processing time and/or a required capacity and/or capability for the resources, for example, of the process which it is assigned to. Accordingly, the assessment parameter preferably represents a measure for the effective utilization of a resource through the process, for example. Alternatively or additionally other criteria may be considered for the assessment of a process and for establishing an assessment parameter. In a preferred embodiment the assessment parameter for a process is determined based on a process volume parameter and an efficiency parameter assigned to the process. The process volume parameter may define a total amount of units or a total number of parts or pieces of products that have to be processed in the process. The efficiency parameter may define an effective extent with respect to a required processing time and/or a required capacity and/or capability for the resources, for example, for a single unit or a single part of piece of a product to be processed.

Preferably, the processes are managed in a process management module of a system according to a preferred embodiment of the present invention. This management module is capable of receiving process specifications for at least one process, preferably for a plurality of processes, from a database and/or a process specification interface, for example.

Some of the preferred functionalities of the process management module according to a preferred embodiment of the present invention are described in the following: .

Receiving process specifications - The process specification for each process may comprise a list of tasks and/or a detailed definition of tasks comprised in the process, a criticality parameter of the process and/or a preferred location for performing the process or at least part of the tasks, where the preferred location may be defined in a task location parameter, for example. The process specification may further comprise a requested starting time for the process, a requested ending time for the process, and/or the process volume parameter.

In a preferred embodiment, the process specification for at least one process may comprise a unique identification of tasks through a task identification parameter (task ID) for each task, for example. A detailed definition or specification of the tasks identified according to the task identification parameters may then be retrieved from a database. The task specifications retrieved from the database may comprise a capacity requirement parameter that, preferably, is initially set to a standard processing time stored in the database. Preferably, a time frame parameter for one or more tasks is initially set to a standard time frame stored in the database. The task specification for one or more tasks may further define a task location and/or a task category.

In one preferred embodiment of the present invention, the process specification and/or the task specification may comprise for one or more processes and/or tasks a forced resource assignment of said process or task to a specific resource. Preferably, the forced resource assignment defines a resource for performing said process or task, where the forced resource assignment is preferably not changed during establishing a first and/or one or more further resource-task assignment sets. The forced resource assignment is preferably received from a user and/or retrieved from a database via the process specification interface.

The task specification for at least one task may further comprise a dependency parameter defining other tasks within the same process on which the at least one task depends. The task on which the at least one task depends are preferably called predecessors or predecessor tasks in the following. Preferably, a bundle parameter may be assigned to at least one task, preferably to each task. Preferably, the bundle parameter defines a group of tasks within a particular process, where tasks having identical bundle parameter belong to the same group of tasks. A grouping of tasks may be of particular advantage for tasks that are preferably assigned to the same resource. Preferably, a group of tasks having the same bundle parameter must be performed by the same resource. This ensures the continuity in the execution of the tasks, e.g. all tasks in the bundle are assigned to the same resource so that the resource can use the output of a predecessor task for the successor tasks. Similarly, if there is no dependency interrelation, bundled tasks might be sharing same material for the execution, therefore assigning those tasks to the same resource is advantageous.

In step ST3 for each process a weighting parameter 102 is determined based on the assessment parameter assigned to the respective process. Preferably, the weighting parameter 102 is an internal parameter (internal weighting parameter) which is, preferably, used for internal processing, such as ranking the processes and is preferably not made visible to the user. In the initial assignment of the weighting parameters 102 to the processes in step ST3, the weighting parameter is preferably set to be identical to the assessment parameter. Accordingly, preferably, for all processes the internal weighting parameter is initially set to the assessment parameter before any preferably manual priority adjustment is made. A manual priority adjustment is preferably made by manually modifying a process ranking parameter as described later.

Preferably, the processes are initially sorted by their assessment parameter, then in a subsidiary way by the process volume parameter, and then in a further subsidiary way by a process criticality parameter. Subsequent sorting in step ST4 is preferably performed by the weighting parameter 102, then in a subsidiary way by the process volume parameter and then in a further subsidiary way by the process criticality parameter. Alternatively also the initial sorting of the processes may be carried out based on the weighting parameter 102 instead of the assessment parameter. Nevertheless, since the weighting parameter 102 is initially identical to the assessment parameter in the described example, the sorting of the processes will be identical in this case. Once the internal weighting parameter is determined, ordering of the processes preferably occurs depending on the internal weighting parameter instead of the assessment parameter.

The criticality parameters assigned to the processes may be received as part of the process specification or retrieved from the database 100. The criticality parameter may be assigned to the processes by a user according to user's preferences. The processes are preferably sorted in descending order of their weighting parameter 102 (or assessment parameter), meaning that the process having the highest weighting parameter (or assessment parameter) is ranked first, the process having the second highest weighting parameter (or assessment parameter) is ranked second, and so on. Processes having identical weighting parameters (or assessment parameters) are preferably ordered according to their process volume parameter preferably in descending order. Even further, processes having identical weighting parameters (or assessment parameters) and identical process volume parameters are preferably ordered according to their process criticality parameter in ascending order. Once the ordering of the processes is completed, a ranking parameter is assigned to the processes, which is preferably an integer number.

There are preferably different types of processes that might use the same resources, but their benefits to the organization may not be measured with the same metrics but different ones. For example, manufacturing of two different types of products, of which production or processing priorities are driven by different parameters, can be performed by the same group of resources, such as building two different models of cars in the same factory. The two different models of cars share the same production lines to a great extent at least for some parts and, therefore, the common tasks are performed by the same resources. For this reason the claimed method presents a solution to assess the priorities of two different groups of processes in a combined way.

Preferably, the method differentiates at least two different groups of processes and uses exemplarily the weighting parameter and the volume parameter, respectively, to prioritize and to measure the benefit of the mentioned at least two different groups. For other types of processes, which may not have exemplarily any measurable benefit to the organization they are simply regarded as "other" group of processes and the only available metric to measure the success of the optimization algorithm is to control their finishing time and try to prevent any delays.

For the "volume" type of processes, preferably another calculated parameter is used which is called as "internal volume parameter" and found and used in the same way as or analogous to the internal weighting parameter, e.g. for the new processes the internal weighting parameter is initially set to the volume parameter. If the ranking of a process is advanced by one, then the "internal volume parameter" of the process that is being promoted and the process that is going to be degraded by one rank will be swapped. Accordingly, for "volume" type processes the internal volume parameter may be understood and used analogous to the weighting parameter, i.e. for "volume" type processes the weighting parameter may preferably be replaced by the internal volume parameter.

Tables 1A to 1I demonstrate sorting and ranking steps for the processes according to a preferred embodiment of the present invention. Each row in the tables (except the labelling row) represents one process identified by the process identification parameter (process ID). Further, the process volume parameter, the assessment parameter, the criticality parameter and the internal weighting parameter 102 for each process are shown in the Tables. Moreover, the ranking parameter assigned to each process in step ST4 is also indicated in the Tables. Finally, in a preferred embodiment a process status parameter is assigned to each of the processes. Table 1A represents an exemplary situation after step ST4. The processes (100, 200, ..., 1000) have been sorted in accordance with the above described preferred sorting criteria and ranked according to the achieved ordering, where the ranking is defined by the ranking parameters (priority ranking parameter) having integer values from 1 to the integer representing the total number of ranked processes, which in the example of Table 1A is 10.

Table 1A

| Priority Ranking Parameter | Process ID | Internal Weighting Parameter | Assessment Parameter | Process Volume Parameter | Criticality Parameter | Process Status |
|---|---|---|---|---|---|---|
| 1 | 100 | 1000 | 1000 | 25000 | 1 | Unscheduled |
| 2 | 200 | 800 | 800 | 20000 | 2 | Unscheduled |
| 3 | 300 | 500 | 500 | 15000 | 1 | Unscheduled |
| 4 | 400 | 500 | 500 | 10000 | 3 | Unscheduled |
| 5 | 500 | 300 | 300 | 12000 | 2 | Unscheduled |
| 6 | 600 | 200 | 200 | 10000 | 1 | Unscheduled |
| 7 | 700 | 200 | 200 | 7000 | 3 | Unscheduled |
| 8 | 800 | 0 | 0 | 17000 | 2 | Unscheduled |
| 9 | 900 | 0 | 0 | 12000 | 1 | Unscheduled |
| 10 | 1000 | 0 | 0 | 12000 | 3 | Unscheduled |

Subsequently, in step ST5 it is determined whether further processes should be added. This determination may be made depending on a respective input from a user who may decide not to add further processes at that stage. In this case the method proceeded to a step ST6 where it is determined whether the user decides to manually modify the ranking of the processes. In this case a modified ranking parameter for at least one process may be received from the user. For example, the user may manually set the ranking parameter for the process with Process ID = 900 to a value of 2, i.e. s/he may manually change the ranking parameter from the previous value 9 to a value of 2, defining this process as the second highest ranked process. Accordingly, the ranking of the processes with a previous ranking parameter between the previous ranking parameter (excluded) and the new ranking parameter (included) of the manually modified process are shifted by 1 towards the value of the previous ranking parameter of the modified process. The resulting new ranking parameters for the individual processes can be seen in Table 1 B discussed below.

Subsequently, in step ST7 the weighting parameter 102 for the modified process is adapted to the new ranking. In one preferred embodiment, the weighting parameter 102 is adapted as follows: With the modified process having a new ranking parameter of N larger than 1 but smaller than the total number of ranked processes, the adapted weighting parameter 102 is determined based on the weighting parameters 102 of the processes having ranking parameter of N-1 and N+1, i.e. the neighbouring processes. Preferably, in case the neighbouring weighting parameters, i.e. the weighting parameter 102 for the processes having the ranking parameters N-1 and N+1, are different, then the adapted weighting parameter 102 of the modified process is set to a value between the neighbouring weighting parameters, preferably to the average value of the neighbouring weighting parameters. Otherwise, i.e. in case the neighbouring weighting parameters are identical, the adapted weighting parameter 102 may be set to the same value.

In case the modified process has a new ranking parameter of 1, its weighting parameter 102 is preferably adapted depending on the weighting parameter 102 of the process with the new ranking parameter 2. Preferably, the modified weighting parameter 102 is set to a value that is by a predetermined number or incremental value, such as 1 or 100, higher than the weighting parameter 102 of the process having the ranking parameter 2. In case the new ranking parameter of the modified process corresponds to the total number of ranked processes, i.e. in case the modified process has been assigned to the lowest rank, its weighting parameter 102 is preferably set to a value 0.

Based on the adapted weighting parameter 102 the method as shown in **Fig. 2** proceeds to step ST4, where the processes are again sorted as described above. Table 1 B represents a situation after the steps ST5 to ST7 and ST4 have been carried out. In this example, a user has modified the ranking parameter of the process (900) to the value 2 in step ST6. In step ST7 the weighting parameter 102 for the process (900) has been adapted to the value 900, which is the average of the neighbouring weighting parameters which are 800 and 1000, respectively. In step ST4 the processes have been sorted as described above. Preferably, all newly added processes have a process status parameter set to "Unscheduled", which may define that no scheduling has been defined for these processes up to this stage.

Table 1B

| Priority Ranking Parameter | Process ID | Internal Weighting Parameter | Assessment | Process Volume Parameter | Criticality | Process Status |
|---|---|---|---|---|---|---|
| 1 | 100 | 1000 | 1000 | 25000 | 1 | Unscheduled |
| 2 | 900 | 900 | 0 | 12000 | 1 | Unscheduled |
| 3 | 200 | 800 | 800 | 20000 | 2 | Unscheduled |
| 4 | 300 | 500 | 500 | 15000 | 1 | Unscheduled |
| 5 | 400 | 500 | 500 | 10000 | 3 | Unscheduled |
| 6 | 500 | 300 | 300 | 12000 | 2 | Unscheduled |
| 7 | 600 | 200 | 200 | 10000 | 1 | Unscheduled |
| 8 | 700 | 200 | 200 | 7000 | 3 | Unscheduled |
| 9 | 800 | 0 | 0 | 17000 | 2 | Unscheduled |
| 10 | 1000 | 0 | 0 | 12000 | 3 | Unscheduled |

From the step ST4 the method again proceeds to step ST5, where it is determined whether further processes are added. Table 1C shows a definition for 3 further processes that may be received from a user. For this the method proceeds to step ST1 as shown in **Fig. 2.** Initially the new processes preferably have no ranking parameter assigned thereto. The 3 new processes may be received in three subsequent cycles of the loop defined by the steps ST1 to ST5, or they may be received simultaneously in one cycle. The new processes are added to the previous processes and sorted and ranked together with the previous processes as described above. After the new processes have been ranked their initial process status parameter may be automatically set from the value "New Process" to the Value "Unscheduled".

Table 1C

| Priority Ranking Parameter | Process ID | Internal Weighting Parameter | Assessment Parameter | Process Volume Parameter | Criticality Parameter | Process Status |
|---|---|---|---|---|---|---|
| NA | 1100 | 500 | 500 | 20000 | 2 | New Process |
| NA | 1200 | 900 | 900 | 10000 | 1 | New Process |
| NA | 1300 | 0 | 0 | 20000 | 1 | New Process |

If in step ST6 no modification of a ranking parameter is requested, the method according to the preferred embodiment as shown in **Fig. 2** proceeds to a step ST8, where it is determined whether a user wants to manually modify at least one of the process status parameters. Accordingly, the user may, in case of need, manually modify the process status parameter for at least one process, where in step ST9 the new status is assigned to the modified process. Preferably, the process status parameter for each process may take one of the values "New Process", "Unscheduled", "Scheduled", "Firm", "On-hold", "Early Start", "In-Progress", "Completed", and "Cancelled" or a status corresponding to these values. In a preferred embodiment the user can change the process status parameter only to the values "On-hold" and "Cancelled" or a status corresponding to these values, while the other values for the process status parameter are automatically assigned by a preferred system.

The method then proceeds to step ST10 of scheduling the processes. Details of the scheduling cycle ST10 according to a preferred embodiment are described later with reference to **Fig. 3.** In step ST10 an available resource capacity 104 for each of a plurality of resources 106 is analyzed, where preferably each of the resources 106 which is analyzed has a capability of performing tasks within at least one task category of the tasks comprised in the processes that have been received and sorted in the previous steps. Based on the analyzed resource capacity for the task categories defined for the sorted processes, a first scheduling of all tasks belonging to the specified processes is established and a first schedule parameter for each of the processes is evaluated depending on the established scheduling of the tasks belonging to the respective process. The first scheduling of all tasks represents a first resource-task assignment set assigning the plurality of tasks to the plurality of resources. Further, when the first resource-task assignment set has been established a first control parameter is evaluated based on the plurality of pairs each comprising a weighting parameter and a schedule parameter assigned to each of the plurality of processes. The first control parameter may be stored together with the first resource-task assignment set.

Further, a second resource-task assignment set different from the first resource-task assignment set is established. The second resource-task assignment set preferably differs from the first resource-task assignment set in that not all tasks are assigned to the same resources as in the first resource-task assignment set. A second schedule parameter for each of the processes is evaluated depending on the established scheduling of the tasks within the second resource-task assignment set and a second control parameter is evaluated based on the plurality of pairs of parameters, each pair comprising a weighting parameter and a schedule parameter defined for each of the plurality of processes. The second control parameter may be stored together with the second resource-task assignment set.

Even further, one or more additional resource-task assignment sets different from the first and second resource-task assignment set and/or different from one another may be established in the same manner and for each additional resource-task assignment set an additional control parameter may be evaluated. Preferably, each additional control parameter is stored together with the respective resource-task assignment set in a database, such as the database 100.

Based on a selection criterion for the control parameter, step ST10 may select one of the stored control parameters. The selection criterion may define to select the resource-task assignment set having the highest control parameter or the lowest control parameter. Alternatively, the selection criterion may define any other condition for the control parameter. Based on the selection of a control parameter, step ST10 may retrieve the corresponding resource-task assignment set from the database, where preferably all established resource-task assignment sets have been stored together with the control parameters. In step ST10 the method may further allocate at least some of the processes to a plurality of resources 106 by allocating the tasks of for processes to the resources according to the selected resource-task assignment set.

The criterion used to reach the optimum effectiveness and/or time efficiency for a process by making use of the method can be different for different types of processes. For some processes, keeping the requirements on the due dates are important hence the method might choose the resource assignment which gives the minimum delays. For some processes, however, analysing only the delays is not sufficient, but the potential losses in case of delay might be considered as well next to the amount of delays. In contrast to the examples given above, some processes may require even early delivery and may require choosing an assessment criterion that favours 'earliness'.

In step ST11, the method may further determine whether the allocation cycle has been completed. The decision on this may be defined according to user input. For example, the user may decide to add further processes or to manually edit one or more of the scheduled or unscheduled processes. This may also include manually ordering or reordering of the processes. In this case the method may proceed to step ST5 which has already been described above. If in step ST11 the allocation cycle is determined to be completed, the method may further comprise a step ST12 of controlling at least some of the resources 106 according to the established allocation of the tasks to the resources. Preferably, a control unit is connected to at least some of the resources via a network and the method, preferably, further comprises a step of directly or indirectly controlling operation of at least some of the resources according to the established schedule. In particular, an operation schedule or control signals or messages corresponding thereto may be transmitted to the individual resources via the network. Operation of the respective resource may be started and stopped either automatically or through a user of the resource in accordance with the transmitted operation schedule.

Table 1 D shows an example of the plurality of processes described above, where the processes 1100, 1200, and 1300 have been added after the other processes have already been scheduled. Said added processes have not yet been scheduled. This is indicated by the process status parameter for the individual processes.

Table 1D

| Priority Ranking Parameter | Process ID | Internal Weighting Parameter | Assessment Parameter | Process Volume Parameter | Criticality Parameter | Process Status |
|---|---|---|---|---|---|---|
| 1 | 100 | 1000 | 1000 | 25000 | 1 | Scheduled |
| 2 | 900 | 900 | 0 | 12000 | 1 | Scheduled |
| 3 | 1200 | 900 | 900 | 10000 | 1 | Unscheduled |
| 4 | 200 | 800 | 800 | 20000 | 2 | Scheduled |
| 5 | 1100 | 500 | 500 | 20000 | 2 | Unscheduled |
| 6 | 300 | 500 | 500 | 15000 | 1 | Scheduled |
| 7 | 400 | 500 | 500 | 10000 | 3 | Scheduled |

(continued)

| Priority Ranking Parameter | Process ID | Internal Weighting Parameter | Assessment Parameter | Process Volume Parameter | Criticality Parameter | Process Status |
|---|---|---|---|---|---|---|
| 8 | 500 | 300 | 300 | 12000 | 2 | Scheduled |
| 9 | 600 | 200 | 200 | 10000 | 1 | Scheduled |
| 10 | 700 | 200 | 200 | 7000 | 3 | Scheduled |
| 11 | 1300 | 0 | 0 | 20000 | 1 | Unscheduled |
| 12 | 800 | 0 | 0 | 17000 | 2 | Scheduled |
| 13 | 1000 | 0 | 0 | 12000 | 3 | Scheduled |

In the example shown in Table 1 D, process 1100 is ranked above process 300 because it has the same internal weighting parameter but a higher process volume parameter. Process 1200 is ranked below process 900 because it has the same weighting parameter but a lower process volume parameter. Process 1300 is ranked above process 800 because it has the same weighting parameter but a higher process volume parameter.

Table 1 E demonstrates an example in which process 1300 has been manually adjusted to the highest ranked process in step ST6 shown in **Fig. 2**. Accordingly, the (internal) weighting parameter is set to a value corresponding to the weighting parameter (value 1000) of the second highest ranked process (process ID 100) plus 1, i.e. to the value 1001

Table 1E

| Priority Ranking Parameter | Process ID | Internal Weighting Parameter | Assessment Parameter | Process Volume Parameter | Criticality Parameter | Process Status |
|---|---|---|---|---|---|---|
| 1 | 1300 | 1001 | 0 | 20000 | 1 | Unscheduled |
| 2 | 100 | 1000 | 1000 | 25000 | 1 | Scheduled |
| 3 | 900 | 900 | 0 | 12000 | 1 | Scheduled |
| 4 | 1200 | 900 | 900 | 10000 | 1 | Unscheduled |
| 5 | 200 | 800 | 800 | 20000 | 2 | Scheduled |
| 6 | 1100 | 500 | 500 | 20000 | 2 | Unscheduled |
| 7 | 300 | 500 | 500 | 15000 | 1 | Scheduled |
| 8 | 400 | 500 | 500 | 10000 | 3 | Scheduled |
| 9 | 500 | 300 | 300 | 12000 | 2 | Scheduled |
| 10 | 600 | 200 | 200 | 10000 | 1 | Scheduled |
| 11 | 700 | 200 | 200 | 7000 | 3 | Scheduled |
| 12 | 800 | 0 | 0 | 17000 | 2 | Scheduled |
| 13 | 1000 | 0 | 0 | 12000 | 3 | Scheduled |

For processes that have already been started the process status parameter is preferably set to a value representing "In-Progress" or a similar value. Preferably, this applies to processes for which at least one task has already been started to be performed by at least one resource. Preferably, a task status parameter (Task_Status) is assigned to at least one task within each process, most preferably a separate task status parameter is assigned to each of the tasks within each of the processes. Preferably, the task status parameter for each task may take one of the values "Unscheduled", "Scheduled", "Firm", "On-hold", "Early Start", "In-Progress", "Completed", and "Cancelled" or a status corresponding to these values. For tasks that have already been started the task status parameter is preferably set to a value representing "In-Progress" or a similar value. For processes that are scheduled to be started within a certain time (firm period), which may be defined through a firm period duration parameter or firm period parameter, the process status parameter is preferably set to a value representing "Firm" or a similar value. Preferably, this improves the reliability of establishing and controlling a schedule for the near future which is defined by the firm period parameter. Accordingly, planning the material and resources required for performing the tasks in advance can be facilitated. In the example of Table 1 F, a new schedule has been generated and processes 200 and 900 are now scheduled within the firm period so that the assigned process status parameter is set to 'Firm'. Processes 1300 and 100 have already been started, so the process status parameter is now updated to 'In-Progress'. Preferably, processes having a status of "In-Progress" or "Firm" are not changed during the scheduling cycle ST10. In one preferred embodiment of the present invention these processes may retain their position in the process priority table until the processes have been completed, i.e. until the process status parameter is set to a value "Complete" or a status corresponding thereto. In another preferred embodiment the ranking parameter of these processes can be automatically and/or manually changed. Such a change can occur before a scheduling of the processes is performed, for example.

Table 1F

| Priority Ranking Parameter | Process ID | Internal Weighting Parameter | Assessment Parameter | Process Volume Parameter | Criticality Parameter | Process Status |
|---|---|---|---|---|---|---|
| 1 | 1300 | 1001 | 0 | 20000 | 1 | Inprogress |
| 2 | 100 | 1000 | 1000 | 25000 | 1 | Inprogress |
| 3 | 900 | 900 | 0 | 12000 | 1 | Firm |
| 4 | 1200 | 900 | 900 | 10000 | 1 | Scheduled |
| 5 | 200 | 800 | 800 | 20000 | 2 | Firm |
| 6 | 1100 | 500 | 500 | 20000 | 2 | Scheduled |
| 7 | 300 | 500 | 500 | 15000 | 1 | Scheduled |
| 8 | 400 | 500 | 500 | 10000 | 3 | Scheduled |
| 9 | 500 | 300 | 300 | 12000 | 2 | Scheduled |
| 10 | 600 | 200 | 200 | 10000 | 1 | Scheduled |
| 11 | 700 | 200 | 200 | 7000 | 3 | Scheduled |
| 12 | 800 | 0 | 0 | 17000 | 2 | Scheduled |
| 13 | 1000 | 0 | 0 | 12000 | 3 | Scheduled |

Preferably, processes having a process status parameter of either "In-Progress" or "Firm" can be manually assigned a status of "On-hold" with a predetermined or predeterminable preferably user defined restart date. In one preferred embodiment, these processes will retain their original priority ranking (ranking parameter) and are preferably assigned to the first available resource after the restart date. In another preferred embodiment the ranking parameter of "resumed" processes can be changed automatically and/or manually.

Table 1 G shows an example, where the process 900 has been manually assigned a process status parameter of "On-hold" with a process restart date of "ASAP" (as soon as possible) to free up capacity for a new urgent process (Process 1400). Process 900 will hold its previous position in the process priority list based on the ranking parameter. Preferably, process 900 will be re-scheduled in step ST10 as soon as a suitable resource capacity 104 is available. In addition, process 700 has been manually assigned a process status parameter of "Cancelled". Processes having a status "Cancelled" are preferably not considered during the assignment to resources in step ST10.

Table 1G

| Priority Ranking Parameter | Process ID | Internal Weighting Parameter | Assessment parameter | Process Volume Parameter | Criticality Parameter | process Status |
|---|---|---|---|---|---|---|
| 1 | 1300 | 1001 | 0 | 20000 | 1 | Inprogress |
| 2 | 100 | 1000 | 1000 | 25000 | 1 | Inprogress |
| 3 | 900 | 900 | 0 | 12000 | 1 | On-Hold |
| 4 | 1200 | 900 | 900 | 10000 | 1 | Scheduled |

(continued)

| Priority Ranking Parameter | Process ID | Internal Weighting Parameter | Assessment parameter | Process Volume Parameter | Criticality Parameter | process Status |
|---|---|---|---|---|---|---|
| 5 | 1400 | 700 | 700 | 20000 | 1 | Unscheduled |
| 6 | 200 | 800 | 800 | 20000 | 2 | Firm |
| 7 | 1100 | 500 | 500 | 20000 | 2 | Scheduled |
| 8 | 300 | 500 | 500 | 15000 | 1 | Scheduled |
| 9 | 400 | 500 | 500 | 10000 | 3 | Scheduled |
| 10 | 500 | 300 | 300 | 12000 | 2 | Scheduled |
| 11 | 600 | 200 | 200 | 10000 | 1 | Scheduled |
| 12 | 700 | 200 | 200 | 7000 | 3 | Cancelled |
| 13 | 800 | 0 | 0 | 17000 | 2 | Scheduled |
| 14 | 1000 | 0 | 0 | 12000 | 3 | Scheduled |

As shown in Table 1H, process 1400, which has already been added in Table 1G, is manually adjusted to have a ranking parameter of "3", indicating that this process is ranked above process 900. Accordingly, process 1400 is preferably scheduled before process 900. The weighting parameter for process 1400 is, preferably automatically, set to the value (1000 + 900) / 2 = 950, as described above.

Table 1H

| Priority Ranking Parameter | Process ID | Internal Weighting Parameter | Assessment Parameter | Process Volume Parameter | Criticality Parameter | Process Status |
|---|---|---|---|---|---|---|
| 1 | 1300 | 1001 | 0 | 20000 | 1 | Inprogress |
| 2 | 100 | 1000 | 1000 | 25000 | 1 | Inprogress |
| 3 | 1400 | 950 | 700 | 20000 | 1 | Unscheduled |
| 4 | 900 | 900 | 0 | 12000 | 1 | On-Hold |
| 5 | 1200 | 900 | 900 | 10000 | 1 | Scheduled |
| 6 | 200 | 800 | 800 | 20000 | 2 | Firm |
| 7 | 1100 | 500 | 500 | 20000 | 2 | Scheduled |
| 8 | 300 | 500 | 500 | 15000 | 1 | Scheduled |
| 9 | 400 | 500 | 500 | 10000 | 3 | Scheduled |
| 10 | 500 | 300 | 300 | 12000 | 2 | Scheduled |
| 11 | 600 | 200 | 200 | 10000 | 1 | Scheduled |
| 12 | 700 | 200 | 200 | 7000 | 3 | Cancelled |
| 13 | 800 | 0 | 0 | 17000 | 2 | Scheduled |
| 14 | 1000 | 0 | 0 | 12000 | 3 | Scheduled |

Table 11 shows an exemplary situation after a new master resources schedule is generated in step ST10. Process 1400 has been at least partly assigned to the resources previously assigned to process 900. This is not visible from the shown table. The process status parameter for process 1400 has been, preferably automatically, set to the value 'Firm'. Process 900 is rescheduled when a suitable resource 106 next becomes available and assigned a process status parameter of 'Scheduled'. Process 100 is now complete and assigned a status of "Complete" or a value corresponding thereto. Preferably, the ranking parameter for completed and/or cancelled processes is, preferably automatically, set to an undefined status, such as a value of "X", indicating that these processes should not be considered during ordering or scheduling of processes. Preferably, processes having such a ranking parameter (e.g. "X") are no longer visible to a user.

Table 1I

| Priority Ranking Parameter | Process ID | Internal Weighting Parameter | Assessment parameter | Process Volume Parameter | Criticality parameter | Process Status |
|---|---|---|---|---|---|---|
| 1 | 1300 | 1001 | 0 | 20000 | 1 | Inprogress |
| 5 | 1400 | 950 | 700 | 20000 | 1 | Firm |
| 3 | 900 | 900 | 0 | 12000 | 1 | Scheduled |
| 4 | 1200 | 900 | 900 | 10000 | 1 | Scheduled |
| 6 | 200 | 800 | 800 | 20000 | 2 | Firm |
| 7 | 1100 | 500 | 500 | 20000 | 2 | Scheduled |
| 8 | 300 | 500 | 500 | 15000 | 1 | Scheduled |
| 9 | 400 | 500 | 500 | 10000 | 3 | Scheduled |
| 10 | 500 | 300 | 300 | 12000 | 2 | Scheduled |
| 11 | 600 | 200 | 200 | 10000 | 1 | Scheduled |
| 13 | 800 | 0 | 0 | 17000 | 2 | Scheduled |
| 14 | 1000 | 0 | 0 | 12000 | 3 | Scheduled |
| X | 100 | 1000 | 1000 | 25000 | 1 | Complete |
| X | 700 | 200 | 200 | 7000 | 3 | Cancelled |

In a preferred embodiment of the present invention the internal weighting parameter may alternatively be determined in a different way when the ranking parameter is (manually) modified. One preferred alternative is described in the following with reference to Table 1B'. For example, the user may manually set the ranking parameter for the process with Process ID = 900 to a value of 2, i.e. s/he may manually change the ranking parameter from the previous value 9 to a value of 2, defining this process as the second highest ranked process, as described above. Accordingly, the ranking of the processes with a previous ranking parameter between the previous ranking parameter (excluded) and the new ranking parameter (included) of the manually modified process are shifted by 1 towards the value of the previous ranking parameter of the modified process. The resulting new ranking parameters for the individual processes can be seen in Table 1 B' discussed below.

Subsequently, in step ST7 the weighting parameter 102 for the modified process is adapted to the new ranking. In the preferred embodiment as described now, the weighting parameter 102 is adapted as follows: With the modified process having a new ranking parameter of N larger than 1 but smaller than the total number of ranked processes, the adapted weighting parameter 102 is determined based on the weighting parameter 102 of the process previously having the ranking parameter of N. Preferably, the adapted weighting parameter 102 of the modified process is set to the previous weighting parameter of the process previously having the ranking parameter of N. Preferably the weighing parameters of each shifted process, i.e. each process for which the new ranking parameter is shifted by 1 towards the value of the previous ranking parameter of the modified process, is modified such that the new ranking parameter corresponds to the previous ranking parameter of the process that previously had the ranking parameter corresponding to the new ranking parameter of said shifted process. For example, the new ranking parameter for the shifted process 200 corresponds to the previous ranking parameter of process 300. Accordingly, the new internal weighting parameter of process 200 is set to the value of the previous weighting parameter of the process 300, as exemplarily shown in Table 1B'.

Table 1B'

| Priority Internal Ranking Parameter | Process ID | Weighting Parameter | Assessment parameter | Process Volume Parameter | Criticality Parameter | Process Status |
|---|---|---|---|---|---|---|
| 1 | 100 | 1000 | 1000 | 25000 | 1 | Unscheduled |
| 2 | 900 | 800 | 0 | 12000 | 1 | Unscheduled |
| 3 | 200 | 500 | 800 | 20000 | 2 | Unscheduled |
| 4 | 300 | 500 | 500 | 15000 | 1 | Unscheduled |
| 5 | 400 | 300 | 500 | 10000 | 3 | Unscheduled |
| 6 | 500 | 200 | 300 | 12000 | 2 | Unscheduled |
| 7 | 600 | 200 | 200 | 10000 | 1 | Unscheduled |
| 8 | 700 | 0 | 200 | 7000 | 3 | Unscheduled |
| 9 | 800 | 0 | 0 | 17000 | 2 | Unscheduled |
| 10 | 1000 | 0 | 0 | 12000 | 3 | Unscheduled |

Details of the scheduling cycle of step ST 10 according to a preferred embodiment of the present invention are described in the following with reference to **Fig. 3**. Preferably the scheduling cycle comprises a step ST20 of initializing the scheduling. Step ST20 may comprise a step of receiving specifications for processes together with the ranking of the processes and at least part of the parameters and statuses as exemplarily described above. In step ST20 data may be retrieved from a database, such as the database 100, and/or from the resources 106. The scheduling cycle is preferably at least partly performed in a central scheduling and/or control unit of a system according to a preferred embodiment of the present invention. Preferably, the scheduling and/or control unit communicates with the database 100 and/or the resources 106 via a network and may particularly receive process specifications via this network.

Preferably, the method according one preferred embodiment of the present invention further comprises a step ST21 of ordering at least part of the available resources 106. This ordering may occur according to arbitrary order conditions. Ordering may occur according to the capacities and/or capabilities of the individual resources with the resource having the highest capacity being positioned at the beginning of the ordering and the resource with the lowest capacity positioned at the end of the ordering, for example. In a different embodiment, ordering of the resources may occur according to a resource identification number, or in alphabetic order of the resource names. Preferably, the established ordering of the resources serves as a well defined basis for the later cycles of assigning tasks to the resources or for analyzing the available capacities of the resources in a well defined order. The resource or during 108 may be stored in a database, such as database 110 and/or the database 100. In one preferred embodiment database 100 may be the same as database 110.

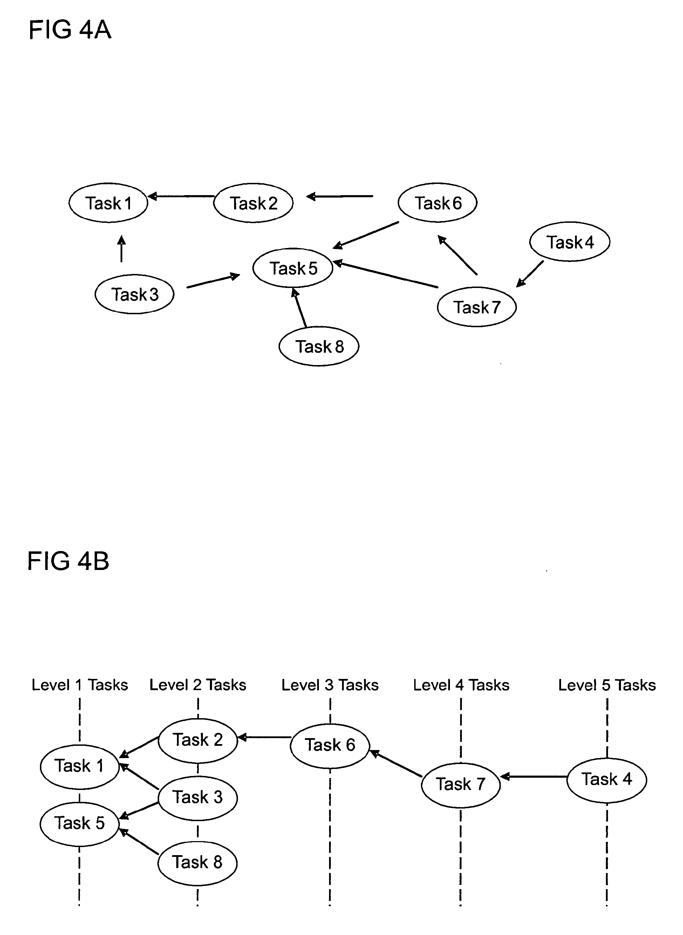

In step ST22 the scheduling cycle may start with the first process. In one preferred embodiment the process with the highest ranking, i.e. the lowest ranking parameter, and having a process status parameter different from "In-Progress" or "Firm" is selected to start the scheduling cycle. In another preferred embodiment, as described in more detail later, the processes having a process status parameter of "In-Progress" or "Firm" are selected first. The selected process is analyzed in step ST23. Step ST23 of analyzing the process, preferably, comprises analyzing the composition of the process from the tasks belonging to the process. Necessary data are preferably retrieved from the database 110 and/or the database 100, for example. Preferably, at least part of the process specification as described above is analyzed in step ST23. Additional or alternative method step that may be comprised in step ST23 according to a preferred embodiment of the present invention are described in more detail in connection with Figs. 4A and 4B as well as Tables 2A to 2C, below. In step ST24 the first task of the process is selected for the further scheduling. This selection is preferably made at least partly based on the time dependencies of the tasks defined in the process specification.

The selected task belongs to a task category which is preferably considered as a basis for the step ST25 of analyzing available resource capacities for carrying out the selected task. Preferably, in step ST25 resources having a capability of performing tasks within the task category of the selected task is searched in an order according to the resource ordering 108 and their available resource capacity is analyzed. The available resource capacity for a resource is preferably determined based on the total resource capacity and an already scheduled capacity of that resource. As described above, the total resource capacity may result from standard used time and a non-scheduled time reserve parameter. If an available resource capacity corresponding to the capacity required by the selected task is found, the task may be assigned to the respective resource in step ST26. This assignment of the selected task to a resource is added to a resource-task assignment set 112 (112', 112", ...), preferably a first resource-task assignment set 112. The resource-task assignment set 112 defines resource capacities that have already been scheduled by assigning tasks to the resources. Preferably, the resource-task assignment set defines both the assignment of tasks to the resources, i.e. the linking between tasks and resources, and a scheduling for carrying out the tasks by the resources, i.e. timing parameters. The timing parameters are preferably based on the processing times and the time frame parameters of the tasks as described above.

Next, in step ST27 it is determined whether the presently analyzed process comprises a further task that has not yet been assigned to a resource. In the affirmative, the next task within the process is selected in step ST28 and the method proceeds to step ST25, where an available resource capacity for performing the newly selected task is analyzed, as described above. In case all tasks within the process have been assigned to resources, no further task is determined in step ST27 and the method preferably proceeds to step ST29, where the scheduling on the process is evaluated based on the scheduling of the individual tasks within the process. According to this evaluated scheduling a schedule parameter 114 is created for the process and preferably stored in a database, such as database 110 and/or database 100. The schedule parameter may define a period of time until the last task within the process is completed according to the scheduling of the tasks defined in the resource-task assignment set 112. Alternatively, the schedule parameter 114 may define the period of time between the starting and the completion of the process, i.e. the duration for performing the process according to the scheduling defined in the resource-task assignment set 112. In a preferred embodiment, the schedule parameter defines the duration from the current time until the scheduled end time of the process or a reciprocal of this duration.

In step ST30 it is determined whether a further process exists that has not yet been scheduled and that should be scheduled. In the affirmative, in step ST31 this process is selected and the method proceeds with step ST24 as described above. In case the tasks for all processes to be scheduled have been assigned to resources, no further process is determined to be scheduled in step ST30. The assignment of all tasks to resources, therefore, has been completed and is preferably stored in a database, such as database 100 and/or database 110. The method further comprises a step ST32 of evaluating this resource-task assignment set. In step ST32 a control parameter 116 is created for this completed resource-task assignment set based on the schedule parameters 114 and the weighting parameters 102. Preferably, the control parameter 116 is evaluated based on the pairs of the schedule parameter 140 and weighting parameter 102 defined for each of the processes. In particular, in a preferred embodiment for each of the processes the schedule parameter 114 and the weighting parameter 102 are multiplied and the sum of all these products for all processes with a resource-task assignment set is defined as the control parameter which is assigned to the respective resource-task assignment set and preferably stored together with this resource-task assignment set in a database, such as database 110, for example.

Further, in step ST33 it is determined whether the scheduling should be completed. In this preferred embodiment, at least when performing step ST32 for the first time the scheduling is regarded as not being completed and the method proceeds with step ST32 of changing the resource ordering 108 and/or establishing a second resource ordering 108' different from the first resource ordering 108. Then the method further proceeds to step ST22 and starts the cycling again with the first process. Changing the resource ordering and/or establishing a second resource ordering in step ST34 ensures that the at least one further resource-task assignment set 112', 112" established in the following scheduling cycle, i.e. a second resource-task assignment set 112' and/or a third resource-task assignment set 112", is different from the first resource-task assignment set 112 established in the first scheduling cycle described above, since at least step ST26 of assigning tasks to resources (and preferably also step ST25 of analyzing the resource capacities) is at least partly based on the resource ordering 108, 108', 108". The complete scheduling cycle is preferably repeated for a plurality of different resource orderings 108, 108', 108" resulting in a plurality of preferably different resource-task assignment sets 112, 112', 112" each having an individual control parameter 116 assigned thereto. The collection of the plurality of resource-task assignment sets 112, 112', 112" preferably form and/or are comprised in a solution set 122.

In case the scheduling is regarded as being completed in step ST33 the method proceeds to step ST35 of selecting one of the established resource-task assignment sets according to a selection condition for the control parameter and allocating processes 118 to resources 106 according to the selected resource-task assignment set. Accordingly in step ST35 an allocation 120 is created that defines a precise scheduling of the processes 118 and their allocation to the resources 106.

A preferred implementation of a method for allocating processes to a plurality of resources is described in the following. In the preferred implementation various parameters, particularly various time parameters and/or scheduling parameters, are defined and/or set as follows. The steps involved with defining and/or setting these parameters may be carried out as part of a parameter initializing step.

Preferably, a requested starting time parameter for a process (Process_RequestedStart) is set to the earliest available time within the time frame period (or time slot) of the requested starting time preferably defined in the process specification. Depending on the definition or scaling of the time frame parameters, this may be the first minute within a requested hour, or the first hour within a requested day, or the first working day (e.g. Monday) within the week of the requested start. This parameter, preferably, indicates the earliest time that the process can commence. If the process can be started immediately, this parameter is preferably set to a time as soon as possible and/or to a value representing "ASAP" (as soon as possible).

Preferably, a requested ending time parameter for a process (Process_RequestedEnd) is set to the latest time within the time frame period (or time slot) of the requested ending time for the process. Analogous to the starting time, the requested ending time may be set to the last minute within a requested hour, or to the last hour within a requested day, or the last working day (e.g. Friday) with the week of the requested ending time. This parameter, preferably, indicates the latest time that a process must be completed. Where no ending time is assigned to the process, this parameter is preferably set to a value representing "ASAP" and/or "Not Available" and/or "Schedule End Time Parameter".

Preferably, a process restart time parameter (Process_Restart) is set to the earliest available time within the time frame period (or time slot) of the requested restarting time, similar to the requested starting time parameter. This parameter, preferably, indicates the earliest time that a process can be restarted once it has been placed on hold. Where the process has been placed on hold in order to free up resource capacity, this parameter is preferably set to a value representing "ASAP". Preferably, if a process that has been put on-hold can be resumed, the process restart time parameter will be set to a value representing "ASAP". In case delay has occurred and restart time is not known, this term is preferably set to a value representing "indefinite".

Preferably, if a task is set to "On-Hold", a task restart time parameter (Task_Restart) is set to the earliest available time within the time frame period (or time slot) of the requested restarting time of a task, similar to the process restart time parameter. This parameter, preferably, indicates the earliest time that a task can be restarted once it has been placed on hold. Preferably, all proceeding tasks dependent on the task placed on hold will be rescheduled based on the earliest restart time assigned to the delayed task. Where the process comprising the task is placed on hold to free up resource capacity, this parameter preferably is set to a value representing "ASAP". Where delay has occurred and the restart time is not known, this parameter is preferably set to a value representing "indefinite".

Preferably, an estimated point in time to complete a task (Task_EDC) is set to the latest available point in time within the time frame period (or time slot) in which the task is estimated to be complete. This parameter, preferably, indicates the estimated point in time until which a task will be completed. In a preferred embodiment, this parameter is entered by a user and represents the estimate point in time to complete a task evaluated at a point in time when the user enters actual data and/or when a resource operates on performing the task.

Preferably, an estimated period of time to complete a task (Task_ETC) is entered by a user and represents the estimated period of time needed for completing a task evaluated at a point in time when the user enters actual data and/or when a resource operates on performing the task.

Preferably, a scheduled task start parameter (Task_ScheduledStart) is set to the earliest available time within the time frame period (or time slot) scheduled for the starting of the task, preferably analogous to the requested starting time parameter for a process. This parameter, preferably, indicates the time which a task is scheduled to start. This parameter is preferably evaluated as part of a scheduling within the selected resource-task assignment set established according to the present invention.

Preferably, a scheduled task end parameter (Task_ScheduledEnd) is set to the latest time within the time frame period (or time slot) of the scheduled ending time for the task, analogous to the requested ending time parameter for a process. This parameter, preferably, indicates the time which a task is scheduled to start. This parameter is preferably evaluated or processed as part of a scheduling within the selected resource assignment established according to the present invention.

Preferably, a task actual start parameter (Task_ActuatStart) is set to the earliest available time within the time frame period (or time slot) in which the task has actually been started to be carried out. Preferably, a task actual end parameter (Task_ActualEnd) is set to the latest available time within the time frame period (or time slot) in which the task is actually completed by the resource.

A Schedule Start Time Parameter preferably defines the point in time starting from which the tasks will be assigned to the resources. A Schedule End Time Parameter preferably defines the point in time which defines the last point in time that a task can be assigned to a resource. This can be a day, a month, a year, or any other (preferably predetermined or determinable) period of time later than the schedule start.

In a preferred embodiment of the present invention the task status parameters are determined as follows:

- If a task cannot be assigned to a resource, the task will be marked as "Unscheduled". The reason for this could be either:

   -- There is no capable resource available that can perform the task; and/or
   -- the capable resource cannot start and finish the task between Schedule Start Time Parameter and Schedule End Time Parameter; and/or

-- the possible assignments to all capable resources fail to comply the requirements specified in the task/process definitions, for example location constraints, bundle constraints, etc.

- If a task is scheduled within the firm period:

    -- The task status will be "In-Progress", if the task commenced (a resource had already started performing the task);
    -- else (previous task status <> In-Progress) the task status will be set to "Firm".

- Else (outside the firm period):

    -- If a resource started performing the task just this status reporting period, or if the task status was "Early-Start" in the previous scheduling period, then the status will be set to "Early-Start";
    -- else if the task was already set to "In-Progress" in the previously, the status will remain as "In-Progress";
    -- else if the task never commenced, the status will be "Scheduled".

In a preferred embodiment of the present invention for each process the process status parameter is updated based on task status parameters (Task_Status) of the tasks comprised in the process. This is preferably performed in the following way, particularly in the following order:

- If any task in the process has "On-Hold" status, the process will receive "On-Hold" status.
- Else if any task in the process has "Unscheduled" status, the process will receive "Unscheduled" status. It is preferred to highlight the process as "Unscheduled", since this shows that there is a problem with either in the process specification or in resource capacities.
- Else if any task in the process has "In-Progress" status, or if any task in the process has "Completed" status and there is at least another task within the process that has "Firm" or "Scheduled" status, then the process will receive "In-Progress" status.
- Else if any task in the process has "Firm" status, the process will receive "Firm" status.
- Else if any task in the process has "Early-Start" status, the process will receive "Early-Start" status.
- Else if all tasks in the process have "Scheduled" status, the process will receive "Scheduled" status.
- Else if all tasks in the process have "Completed" status, the status of the process will be "Completed".

In another preferred embodiment the update procedure may be implemented as follows:

IF Task_Status = 'Onhold' and Task_Restart = 'Unknown' for ANY TASK in Process THEN

    Process_Status ='Onhold'
    Process_Restart = 'Unknown'
    Task_Status = 'Onhold' for all Task_Status <> 'Complete'; or 'Cancelled' in entire process

ELSE IF Task_Status = 'Onhold' for all process tasks THEN

    Process_Status = 'Onhold'

ELSE IF Task_Status ='In-Progress' for ANY TASK in process THEN

    Process_Status ='In-Progress'

ELSE IF Task_Status = 'Complete' for ALL TASKS (excluding those marked as 'Cancelled') in process THEN

    Process_Status ='Complete'

ELSE IF Task_Status = 'Cancelled' for ALL TASKS in process THEN

    Process_Status ='Cancelled'

In this preferred implementation the task comprised in a process are analyzed. It is determined whether any task in the process has status information (a process status parameter) set to a value representing "Onhold" and a restart information set to a value representing "Unknown". In case such a task is found within the process, the process status parameter is set to a value representing "Onhold", the process restart value is set to a value representing "Unkown", and the status for all tasks that do not have a value representing "Complete" or "Cancelled" within the process is set to a value representing "Onhold". Accordingly, it is preferred that if a restart time for a task has not been entered then all tasks that are not already completed or cancelled, and the entire process is defined to have a status representing "Onhold".

In case no task is found in the process that has a task status parameter representing "Onhold" and a restart value representing "Unknown", it is preferably determined whether all tasks within the process have a status representing "Onhold". In the affirmative the status of the process is preferably set to a value representing "Onhold". Further, in case none of the aforementioned conditions is fulfilled, it is preferably determined whether any task in the process has a status representing a value "In-Progress". If such a task is found within the process, then the process status parameter is preferably set to a value representing "In-Progress".

Even further, if none of the previous conditions is met, it is determined whether all of the tasks within the process have a status value representing "Complete". In this case the status of the process is set to a value representing "Complete". Accordingly, in case all tasks are completed, the status of the whole process is preferably set to a value indicating that the process is completed. Preferably, the status of the process is also set to a value representing "Complete", if the process comprises at least one task having a status representing "Complete" and additionally if all tasks not having a status representing "Complete" within the process instead have a status representing "Cancelled". Accordingly, the status of the whole process, i.e. the process status parameter, is preferably set to a value indicating that the process is completed, if at least one task has been completed and if no uncompleted task remains uncancelled within the process.

Finally, if none of the aforementioned conditions is fulfilled, it is determined whether all tasks within the process have a status representing the value "Cancelled". In this case the status of the process is set to a value representing "Cancelled". Accordingly, in case all tasks within a process are cancelled, then the process itself is marked as being cancelled.

Preferably, if any task in a process has "Firm" status, but other tasks do not have "On-Hold", "Unscheduled", or "In-Progress" status, the status of the process will be set to "Firm". In a preferred embodiment the status of the process is set to a value representing "Firm", if the process is already scheduled to be started with a given period of time (firm period), given in minutes, hours, days, or weeks, for example.

This aspect may be implemented as shown in the following example:

```
IF Process_SchedutedStart <> NULL AND Process_Status <> 'Onhold';
'Complete'; 'Cancelled' THEN
     IF Process_ScheduledStart <= (CURRENT_TIME +
FIRM_PERIOD) THEN
           Process_Status = 'Firm'
           Task_Status = 'Firm' for all tasks associated with the
process
      ELSE
           Process_Status = 'Scheduled'
           Task_Status = 'Scheduled' for all tasks associated with
the process
      END
END
```

Alternatively, this aspect may be implemented as show above, while using the Scheduling Start Time Parameter instead of the CURRENT_TIME.

Accordingly, it is preferably determined whether a scheduled starting time is assigned to the process that is different from "NULL" and whether the process status parameter has a value other than "Onhold", "Complete", or "Cancelled". In case both conditions are fulfilled, it is further determined whether the starting time of the process is scheduled to a time not later than the current time plus the given firm period. In this case the status of the process is set to a value representing "Firm". Further, preferably also the statuses for all of the tasks comprised in the process are set to a value representing "Firm". In case the latter condition is not fulfilled, i.e. in case the process is scheduled to start after the expiry of the firm period, the status of the process as well as the statuses of all tasks within the process are set to a value representing "Scheduled".

In the following, a preferred implementation of scheduling tasks to resources is described. This section updates the schedule based on task actuals, and schedules task based on priority, i.e. ranking parameter, and/or location and/or available resources.

In a first step scheduling is adjusted based on process actuals for processes with entered actual data, i.e. processes which have already been worked on wherein data corresponding thereto are stored in a corresponding database. Preferably, the operation commences with processes with highest process priority, i.e. lowest ranking parameter, and having entered actual values for all tasks not complete or cancelled. The task's remaining and/or total processing time is updated based on the estimated time to complete the task for tasks that have been started, and based on standard values, such as the standard processing time, for tasks not yet started. The Task_ScheduledEnd parameter is updated based on the estimated time to complete the task for tasks that have started, and the total elapsed time for a task to be completed, preferably expressed in terms of time slots, is updated based on standard values, such as the standard processing time, for tasks not started. The minimum and maximum processing time per time frame period (time slot) is determined that can be assigned to a resource based on the remaining and/or the total processing time and the Task_ScheduledEnd parameter. Preferably, if the actual number of time slots that a task is scheduled is larger than the minimum elapsed time then the minimum limit for processing time per time slot in the last time slot does not apply. Available capacity of resource is determined based on (standard use time x non-scheduled time reserve parameter) - (processing time already allocated for updated actuals). Task processing time (Task_Processing) per time slot is allocated to the resource between the minimum and maximum limits into buckets of time slots until all processing time is allocated. Further, it is checked that the task will finish in the time slot of Task_ScheduledEnd based on allocations of the processing time into buckets of time slots for tasks that have already started to be processed. Even further, it is, preferably, checked that the minimum elapsed time is satisfied based on allocations of the processing time into buckets of time slots for tasks that have not already started to be processed. The Task_ScheduledStart and Task_ScheduledEnd parameters are assigned based on the time slots that the allocated processing time is scheduled to start and end, respectively. Preferably, the above operations are repeated for all tasks in a process based on task dependency until all tasks are updated. Once all tasks are scheduled the Process_ScheduledEnd parameter is set to the maximum Task_ScheduledEnd parameter for all tasks scheduled in that process. Preferably, all operations in this first step are repeated for all processes with entered actual values, i.e. processes that have already been started to be carried out by at least one resource.

In a second step, preferably, analogous operations are performed for processes having the status "Firm".

In a third step, preferably, a master resource schedule is generated. First, all tasks with a task status parameter having a value "Unscheduled" or "Scheduled" or a status corresponding to these values and with the process having a weighting parameter larger than 0, are scheduled based on the process priority, i.e. the ranking parameter and the task dependency parameters. All tasks associated with processes having a process status parameter of "In-Progress" or "Firm" will remain locked in the schedule. All tasks associated with processes having a process status parameter of "Cancelled" or "Complete" will not be considered for scheduling. Tasks are selected based on the ranking parameter of the process and based on the task dependency parameters. A set of suitable resources to complete a task is searched or retrieved based on the task identification and/or the task location and/or the task category. Tasks within a process are determined that must be bundled to a single resource. The remaining and/or the total processing time is updated based on the estimated time to complete the task for tasks that have been started, and based on standard values, such as the standard processing time, for tasks not yet started. The Task_ScheduledEnd parameter is updated based on the estimated time to complete the task for tasks that have been started, and the total elapsed time for a task to be completed, preferably expressed in terms of time slots, is updated based on standard values, such as standard processing time, for tasks not started. The minimum and maximum processing time per time slot is determined that can be assigned to a resource based on the remaining and/or the total processing time and the Task_ScheduledEnd parameter. Preferably, if the actual number of time slots that a task is scheduled is larger than the minimum elapsed time, then no minimum limit for the processing time per time slot in the final time slot does apply.

Preferably, the following operations are repeated for all possible combinations of resources in an identified set of suitable resources: The available capacity of resources is determined based on (standard use time x non-scheduled time reserve parameter) - (processing time already allocated for other scheduled tasks). "Actuals" may define activities and/or operations performed on the tasks and/or processes, particularly in connection with carrying out at least part of the tasks and/or processes at a resource. The task processing time per time slot is allocated to the resources between the minimum and maximum limits into buckets of time slots until all processing time is allocated. Preferably, it is further checked that the task will finish in the time slot defined by the Task_ScheduledEnd parameter based on allocations of the processing time into buckets of time slots for tasks that have already started. Even further, it is checked that the minimum elapsed time is satisfied based on allocations of the processing time into buckets of time slots for tasks that have not already been started. The Task_ScheduledStart and Task_ScheduledEnd parameters are assigned based on the time slots that the allocated processing time is scheduled to start and end. Preferably, the above operations are repeated for all tasks in a process based on the task dependency parameters until all tasks are updated.

Once all tasks are scheduled, the Process_ScheduledEnd parameter is set to the maximum of the Task_ScheduledEnd parameters for all tasks scheduled in a process. The Process_ScheduledStart parameter is set to the minimum of the Task_ScheduledStart parameters for all tasks scheduled in a process. The duration between the current time and the Process_ScheduledEnd parameter (i.e. Process_ScheduledEnd - CURRENT DATE) or between the Schedule Start Time Parameter and the Process_ScheduledEnd parameter (i.e. Process_ScheduledEnd - Schedule Start Time Parameter) is calculated. The result thereof, preferably, represents the schedule parameter for the respective process. Further, the ratio between the (internal) weighting parameter and the schedule parameter is calculated. Preferably, depending on the process group the internal weighting parameter or the (internal) volume parameter and the schedule parameter is calculated to give the score parameter for the process that has just been scheduled as a part of the current resource-task assignment set.

Preferably, the above operations are repeated for all processes with a weighting factor larger than 0 and the ratio between the respective weighting parameters and the schedule parameters is calculated. Preferably, all these ratios are summed and the sum is identified as the control parameter for the scheduling.

These operations may be applied for a plurality of different resource-task assignment sets and the resulting control parameters may be compared. Preferably the operations are repeated until a maximum of the control parameter is achieved. The corresponding resource-task assignment set may be selected as a basis for allocating the processes to the resources, and in particular for controlling the resources according to the established scheduling, and finally for all other processes that have volume parameter = 0.

Preferably analogous operations are performed for all tasks with task status parameter "Unscheduled" or "Scheduled" and a weighting parameter being 0, where in the steps of evaluating a control parameter the process volume parameter may be used instead of the weighting parameter, for example.

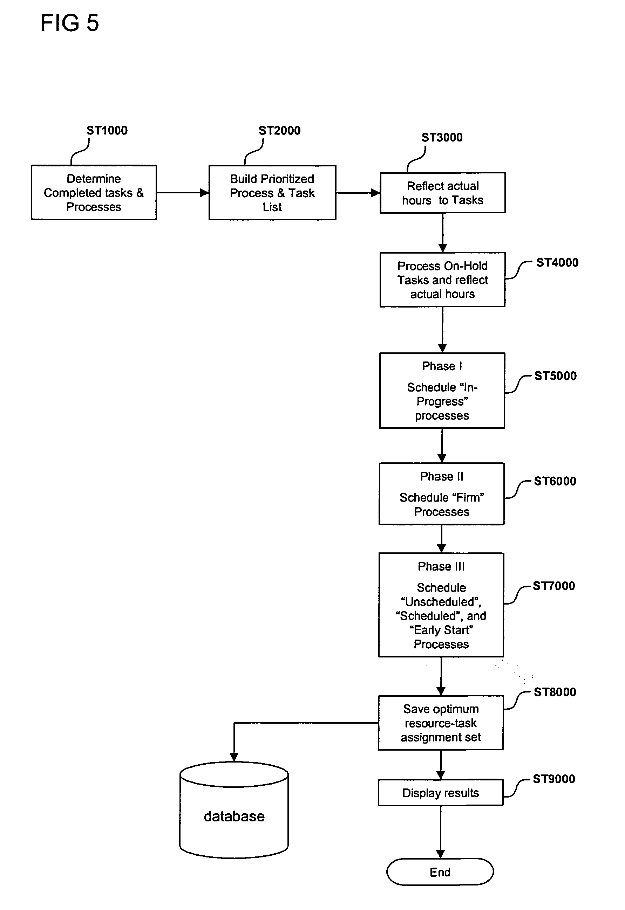

The system according to a preferred embodiment of the present invention may initially schedule the processes according to standard values for each task, such as a standard processing time for the capacity requirement parameter of a task. The processes, however, can vary in complexity and duration. In some cases, the standard estimates are not 100% accurate to initially guess the total effort and duration required for completing a task. Once the process is started, the time spent on each task might be different from the estimates, the initial standard values. Accordingly, the system preferably includes a status tracking module that receives from at least one resource, preferably from a plurality of resources, task report data indicating the actual state for at least one task. The task report data may comprise the estimated point in time to complete the task (Task_EDC) and/or the estimated period of time to complete the task (Task_ETC). Alternatively or additionally the task report data may comprise an actual time spent on performing the task within a certain time frame period (time slot) and/or a mean value of the actual time per time frame period (time slot) spent on performing the task. Preferably, the task report data comprise the task status parameter. At least part of the task report data may be automatically retrieved from resource log data, for example. At least part of the task report data may be manually entered by a user. In one preferred embodiment these aspects may be implemented in a step ST3000 described in connection with Fig. 5, below.

Preferably, based on the received task report data the system may update a planned time and/or a planned duration value of each task. Preferably, the capacity requirement parameter and/or the time frame parameter for one or more tasks may be replaced and/or updated based on the received task report data.

In a method according to a preferred embodiment of the present invention all possible resource-task assignment sets defining all possible assignments of the plurality of tasks to the plurality of resources are computed and the corresponding control parameter for each of the established resource-task assignment sets is evaluated. Depending on the selection criterion for the control parameter one of the established resource-task assignment sets is selected. Preferably, the control parameter is represented by a numeral value and the selection criterion prescribes to select the resource-task assignment set having the highest or the lowest control parameter.

The optimization of the schedule according to a preferred embodiment of the present invention may comprise one or more of the following scheduling steps: A first scheduling step, preferably, comprises a step of setting up and/or retrieving priority lists for processes and tasks, preferably for processes and tasks that are going to be processed as part of the current scheduling phase. A second scheduling step may comprise a step of identifying a resource suitability set. A third scheduling step, preferably, comprises a step of scheduling tasks to available resource capacities. Further, a fourth scheduling step may comprise a step of optimizing the schedule. Finally, a fifth scheduling step, preferably comprise a step of updating the process status parameter and/or the task status parameter. One or more of these steps may be at least partly implemented or comprised in a step ST5000 and/or a step ST6000 and/or a step ST7000 described in more detail in connection with **Figs. 5** to **7**, below. Preferably, each of these 5 steps is repeated in a prioritized order for all processes depending on the current process status parameter, the weighting parameter and/or the process volume parameter. It should be noted in this connection, however, that the above enumeration of the scheduling steps is not necessarily identical to the chronological order of these scheduling steps, though it would be preferred to carry out the steps in the listed order. These five scheduling steps according to a preferred embodiment of the present invention are described in more detail in the following:

In the step of setting up and/or retrieving priority lists for the processes and tasks, the following two aspects may be considered.

Firstly, a process priority list may be set up by sorting the processes depending on the (internal) weighting parameter, the process volume parameter and the process criticality parameter in subsequent ordering steps as described above. The resulting process priority list may define a scheduling priority of the processes which is used for subsequent scheduling steps.

Secondly, a task priority list for at least some tasks within a process, preferably for all tasks within a process, may be set up based on the dependency parameters assigned to the tasks. Preferably, for each process a task priority list is established defining a priority ranking of at least some of the tasks, most preferably all tasks comprised in the respective process. These resulting task priority lists may define a scheduling priority of the tasks that is used for the subsequent scheduling steps. In one preferred embodiment the task priority list for a process is established based on the dependency parameters only.

One or more of these aspects and/or further details of the step of setting up and/or retrieving priority lists for the processes and tasks according to a preferred embodiment of the present invention as described in the following may be at least partly implemented or comprised in a step ST2000 described in more detail in connection with **Fig. 5**, below.

A dependency of a task on one or more other tasks is preferably defined in the dependency parameters assigned to said task. This dependency, preferably, defines that a task cannot be performed before all of its predecessors identified in the dependency parameter of this task are started and/or finished. Therefore, the provision of a task priority list may ensure that for each task in a process all other tasks on which the one task depends can be scheduled to be performed before the one task.

For a detailed description of the step of setting up and/or retrieving a task priority list according to a preferred embodiment of the present invention, reference is made to the schematics shown in **Figs. 4A** and **4B. Fig. 4A** shows a plurality of tasks (Task 1 to Task 8) together with their dependencies, where all tasks are preferably comprised in the same process. Each arrow between two tasks represents a dependency between these two tasks, where the arrow starts at the task which depends on the task to which the arrow points. Task 6, for example, depends both on Task 2 and Task 5.

In a preferred embodiment the step of setting up a task priority list comprises one or more of the steps:

- Retrieving for each task in a process the dependency parameter assigned to the task.
- Determining all tasks that do not depend on any other task in the process and assigning to the determined tasks a task level parameter representing the value "level-1 task" or "1" or a status corresponding to this value.
- Setting an earliest task starting time for the tasks with a task level parameter having the value "level-1 task" or "1" (or a corresponding value) to the value of the requested starting time parameter of the process.
- Establishing task levels for all tasks by determining for each task the maximum task level of its predecessors (maximum predecessor level) and assigning the task level parameter representing the value (maximum predecessor level +1) to that said task. Preferably, this step is repeated until all task levels are determined. For example, if it is determined for a task that its predecessor having the highest task lever parameter belongs to a task level represented by the value "level-2 task" or "2" or a corresponding value, then task level parameter for this task is set to a value representing "level-3 task" or "3" or a corresponding value. In one preferred embodiment the task level parameter for all tasks is initially set to a value representing "level-1 task" or "1" or a corresponding value.
- Constructing the ordered task list within the process by starting with the level-1 tasks and adding tasks to the ordered task list level by level.

An example is show with reference to **Figs. 4A** and **4B**. In the described preferred embodiment, firstly, all tasks with the process are determined that do not depend on any other task, i.e. that do have any predecessor. This concerns "Task 1" and "Task 5". Preferably, the earliest task starting time for these tasks is set to the requested starting time parameter of the process which these tasks belong to. The task level parameter of these tasks is set to a value representing "level-1 task" or "1" or a corresponding value. In one preferred embodiment this lowest task level parameter is initially assigned to all tasks within the process. In a further step, for all tasks the predecessor are determined which are preferably defined in the respective task dependency parameter for each task. For each task the maximum of the predecessor levels, i.e. the task levels of the predecessors, is determined and the task level pf said task is set to a value with the next rank which is preferably by "1" higher than the determined maximum predecessor level.

Table 2A shows the resulting values. Task 3, for example, depends on Task 1 and Task 5 which, therefore, are the predecessors of Task 3, while Task 1 and Task 5 do not depend on any other task. Accordingly, the maximum predecessor level of Task 3 is determined to be "1" and the task level parameter of Task 3 is set to the value "2".

Table 2A

| Task | Predecessors | Max Predecessor Level | Task Level |
|------|--------------|-----------------------|------------|
| 1 | None | None | 1 |
| 2 | 1 | 1 | 2 |
| 3 | 1,5 | 1 | 2 |

(continued)

| Task | Predecessors | Max Predecessor Level | Task Level |
|------|--------------|-----------------------|------------|
| 4 | 7 | 1 | 2 |
| 5 | None | None | 1 |
| 6 | 2, 5 | 1 | 2 |
| 7 | 5, 6 | 1 | 2 |
| 8 | 5 | 1 | 2 |

The set of determining for each task the maximum task level of its predecessors is repeated such that the final task levels are successively established. Table 2B and Table 2C preferably represent the situations after said determining step has been performed for the third and the fourth time, respectively.

Table 2B

| Task | Predecessors | Max Predecessor Level | Task Level |
|------|--------------|-----------------------|------------|
| 1 | None | None | 1 |
| 2 | 1 | 1 | 2 |
| 3 | 1,5 | 1 | 2 |
| 4 | 7 | 2 | 3 |
| 5 | None | None | 1 |
| 6 | 2,5 | 2 | 3 |
| 7 | 5, 6 | 3 | 4 |
| 8 | 5 | 1 | 2 |

Table 2C

| Task | Predecessors | Max Predecessor Level | Task Level |
|------|--------------|-----------------------|------------|
| 1 | None | None | 1 |
| 2 | 1 | 1 | 2 |
| 3 | 1,5 | 1 | 2 |
| 4 | 7 | 4 | 5 |
| 5 | None | None | 1 |
| 6 | 2, 5 | 2 | 3 |
| 7 | 5, 6 | 3 | 4 |
| 8 | 5 | 1 | 2 |

Fig. 4B demonstrates the assignment of the tasks of Fig. 4A to different task levels in accordance with the result shown in Table 2C.

Based on the result as shown in Table 2C, for example, the task priority list may be set up in accordance with the established task levels. This resulting task priority list may be as follows:

Task 1, Task 5, Task 2, Task 3, Task 8, Task 6, Task 7, Task 4

In this task priority list the tasks are preferably initially sorted by their task level, then in a subsidiary way by the task ID in numerically and/or alphabetically ascending order, for example. For tasks having the same task level, however, their relative ordering with respect to each other is uncritical and may be arbitrarily. Once the process priority list and the task priority list(s) are established, a complete ordered list of all tasks for all processes may be established.

Preferably, this complete ordered list of tasks is used for subsequent step of scheduling.

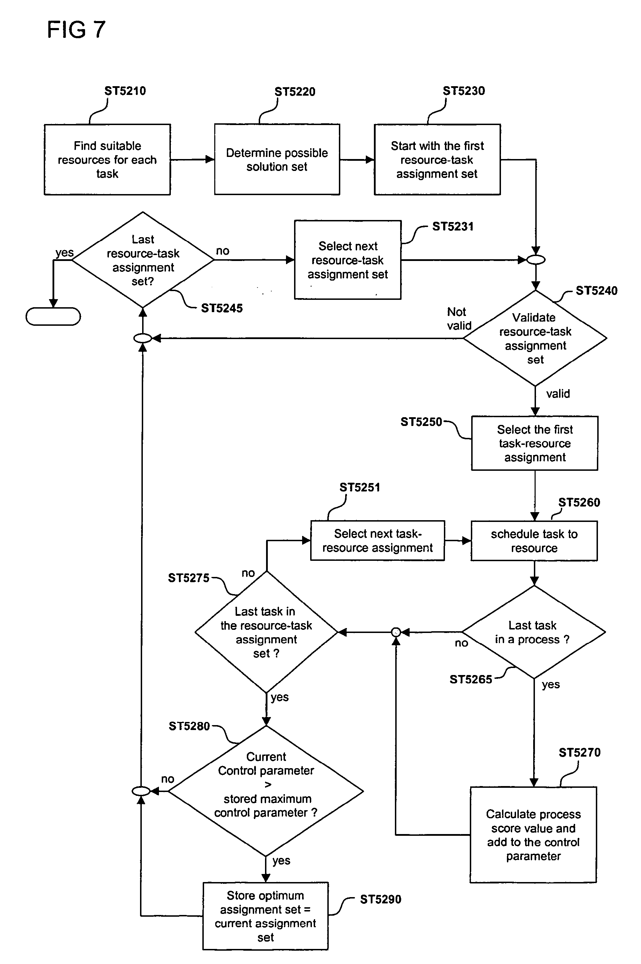

In the following, the step of identifying a resource suitability set according to a preferred embodiment of the present invention is described in more detail. This step or at least some of its aspects according to a preferred embodiment of the present invention as described in the following may be at least partly implemented in a step ST5220 described in more detail in connection with **Fig. 7,** below. Once the process priority list and the task priority list(s) have been established, it is preferred to identify the complete set of resources capable of performing the tasks. Identifying possible resources of performing a task is preferably achieved by matching the preferred task location and task category of this task with the resource capabilities and locations. Preferably, one or more of the following rules may be considered when matching said task properties with the respective resource properties:

- If a preferred task location is set to a status representing "Any Onshore", "Any Offshore", or "Any Location", or to a value representing such status, then resources from all onshore locations, all offshore locations or all locations, respectively, are considered for resources corresponding to the required task category.
- All tasks having the same bundle parameter within the same process are preferably performed by the same resource. This means that in order for a resource to be considered to complete all tasks in the bundle this resource must have a capability of performing tasks with task categories of all of the tasks in the bundle.

In summary the resource suitability set represents for each task the complete list of all resources capable of performing the task based on the task category and/or the task location. A solution set 122 then provides the total number of combinations that will be tested when trying to identify the optimum assignment of the plurality of tasks to the plurality of resources. Table 3 shows a preferred example of a resource suitability set for four processes having the process ID 0100, 1200, 1400 and 1500, respectively and each process comprising a plurality of tasks. The column "Resource" indicates for each task all resources that are capable of performing the task when considering the task category ("Category") and the preferred task location ("Location"). The total number of possible combinations of assigning the tasks to the resources is given by: 2 x 1 x 1 x 1 x 3 x 1 x 2 x 1 = 12, where it is considered that tasks having the same bundle parameter ("Bundle ID") within the same process are assigned to the same resource.

Table 3

| Process ID | Task ID | Bundle ID | Location | Category | Resource Suitability Set |
|---|---|---|---|---|---|
| 0100 | 0103 | 1 | Site 2 | Category 03 | R1, R2 |
| 0100 | 0111 | 2 | Site 1 | Category 09 | R3 |
| 0100 | 0109 | 2 | Site 1 | Category 09 | R3 |
| 0100 | 0110 | 2 | Site 1 | Category 09 | R3 |
| 1200 | 1201 | 1 | Undefined | Category 09 | R3, R8, R9 |
| 1200 | 1211 | 1 | Undefined | Category 09 | R3, R8, R9 |
| 1200 | 1222 | 1 | Undefined | Category 09 | R3, R8, R9 |
| 1400 | 1404 | 1 | Site 1 | Category 09 | R3 |
| 1400 | 1413 | 1 | Site 1 | Category 09 | R3 |
| 1500 | 1502 | 1 | Site 1 | Category 02 | R3, R4 |
| 1500 | 1505 | 1 | Site 1 | Category 02 | R3, R4 |

Preferably, for each task a list of resources is determined that can perform the task preferably based on the task category and/or the preferred location, for example. If there is a number of m tasks (task 1 to task m) and a each task can be assigned to a number of $n_i$ resources, the total number of combinations preferably becomes $\prod_{i=0}^{m} n_i$.

This formula is preferably applicable if no bundle constraints exist. In the example, however, the bundle constraint has already been considered in order to reach the result of 12, since the tasks of the process 1200 and 1500 can only be scheduled to the same resource, since they are part of the same bundle, respectively. For example, the total number of combinations for the given example is indeed 2x1x1x1x3x3x3x1x1x2x2 = 216. However, the system preferably checks for invalid combinations in ST5240 and only considers the valid alternatives for scheduling.

In the following, the step of scheduling tasks to available resource capacities according to a preferred embodiment of the present invention is described in more detail. This step or at least some of its aspects according to a preferred embodiment of the present invention as described in the following may be at least partly implemented in a step ST5260 described in more detail in connection with **Fig. 7**, below. Preferably, at least two time parameters may be considered during the scheduling:

- the capacity requirement parameter which preferably represents a required processing time for a particular task to be performed by a resource, and
- the time frame parameter that preferably defines a period of minimum time required for carrying out the task. The time frame parameter may define a number of time frame periods or time slots.

In a preferred embodiment of the present invention at least a third time parameter may be considered for scheduling: A scheduling period parameter may define for each task a minimum number of scheduling time blocks required for performing the tasks. Preferably, the scheduling period parameter for a task is determined based on the time frame parameter assigned to the task. Preferably, the scheduling time blocks represent time period units larger than the time frame periods (time slots). For example, the time frame parameter for a complex painting task may define a minimum number of 10 time slots, where each time slot represents 1 hour. A scheduling time block may be defined as a work shift (e.g. spanning 8 hours). Accordingly, the scheduling period parameter may be set to a value of "2 shifts" or "2" or a status corresponding to this value, since it is preferably determined from the time frame parameter and the scheduling time block definition that said complex painting task at least partly extends to two work shifts. The capacity requirement parameter for this complex painting task may represent a required processing time of 50 minutes, for example. Accordingly the 50 minutes processing time may be distributed over the 10 hours with a mean time of 5 minutes processing time within each hour for example.

Generally, the scheduling period parameter is preferably determined from the time frame parameter as follows: The number of time frame periods defined in the time frame parameter (e.g. 10 hours) is divided by the number of time frame periods per scheduling time block (e.g. 8 hours per shift, 24 hours per day, 60 minutes per hour, 5 workday per week, etc.) and the result (1.25 in the shown example) is round up to a full integer number (2 in the shown example).

Further, in a preferred embodiment an average processing time per scheduling time block is determined by dividing the total processing time, as preferably defined in the capacity requirement parameter, by the minimum number of required scheduling time blocks, as preferably defined in the scheduling period parameter. In the shown example this results in 25 minutes per shift. This value may be assigned to and/or processed as a mean time bucket parameter. Further preferably, a time bucket variation parameter may be defined that preferably represents a relative deviation of the actual processing time within each scheduling time block from the mean time bucket parameter when scheduling the tasks. The bucket variation parameter may be set to 50%, for example, indicating that the actually scheduled processing time per week should be at least 50% and at most 150% of the value defined by the mean time bucket parameter. These values define a minimum bucket processing time and a maximum bucket processing time. Alternatively, any other value may be used for the bucket variation parameter depending on the particular requirements.

In order for a resource to finish a complex painting task according to a further example, the resource may need to paint the same area with different materials however in order to start painting the second layer the resource may have to wait one day for the paint to dry out. The painting task could take net 4hrs with two 2 hours blocks spread to two working shifts. Therefore, different task categories may require different time utilization factors of the resources. It is not required that the time bucket variation parameters (time utilization) are the same for all tasks. Defining the minimum time bucket processing time parameter of 50% of the value defined by the mean time bucket parameter and the maximum at 150% of the value defined by the mean time bucket parameter may not be the optimum for all task categories. Therefore, the minimum and maximum parameters are exemplarily given and they may change according to task types.

When assigning tasks to available resources one or more of the following rules may be considered:

- If a task is spread over multiple scheduling time blocks, the scheduling time blocks should be consecutive scheduling time blocks, i.e. there should be no interruption.
- The minimum bucket processing time will be first assigned to each of scheduling time blocks, therefore resulting in a main block.
- Once the minimum bucket processing time is inserted into the main block, then the remaining processing time will be inserted until the maximum bucket processing time is reached with an increment defined in a incremental bucket processing time parameter and/or unit the total processing time is completely assigned.
- If there is still processing time to be scheduled, then a so-called tail block will be started and the task's assignment duration will be extended scheduling time block by scheduling time block, until all of the remaining processing time is assigned to the available capacity of the respective resource.

In the following example, a task which is planned to take 32 Hours to complete in 16 workdays is added to the schedule. The scheduling time block may be defined as a week having 5 workdays. Accordingly, the scheduling period parameter is determined to define 4 week (16/5 up-rounded). The mean time bucket parameter defines 8 hours per week, where the minimum and the maximum bucket processing times may be set to 4 hours per week and 12 hours per week, respectively. The total resource capacity may be determined to be 20 hours per week.

The available resource capacity (in hours) per week prior to scheduling this particular task may be as follows in the individual weeks (scheduling time blocks STB1 to STB 6):

Table 4

| STB1 | STB2 | STB3 | STB4 | STB5 | STB6 |
|------|------|------|------|------|------|
| 6 | 4 | 4 | 5 | 8 | 10 |

Accordingly, the available resource capacity in the first week (STB1) is 6 hours and so on, as shown in Table 4.

The main block for the task will be a 4-week long block. For this block to be a valid block for scheduling, it must allow the algorithm to schedule a minimum of 4 hours to each week. If we look at the available capacities from Week 1 (STB1) to 4 (STB4), it can be seen that it is possible to assign 4 hours to each week which corresponds to the minimum bucket processing time. The result of the assigned processing time (in hours) within the main block is as follows:

Table 5A

| STB1 | STB2 | STB3 | STB4 | STB5 | STB6 |
|------|------|------|------|------|------|
| 4 | 4 | 4 | 4 | | |

In a next step, the assigned processing time is increased by an incremental bucket processing time of 0.5 hours until either the maximum bucket processing time (12 hours in this example) is reached or the available capacity is finished. Subsequent iterations of these steps are shown in the Tables 5B to 5E.
Iteration 1:

Table 5B

| STB1 | STB2 | STB3 | STB4 | STB5 | STB6 |
|------|------|------|------|------|------|
| 4.5 | 4 | 4 | 4.5 | | |

Iteration 2:

Table 5C

| STB1 | STB2 | STB3 | STB4 | STB5 | STB6 |
|------|------|------|------|------|------|
| 5 | 4 | 4 | 5 | | |

Iteration 3:

Table 5D

| STB1 | STB2 | STB3 | STB4 | STB5 | STB6 |
|------|------|------|------|------|------|
| 5.5 | 4 | 4 | 5 | | |

Iteration 4:

Table 5E

| STB1 | STB2 | STB3 | STB4 | STB5 | STB6 |
|------|------|------|------|------|------|
| 6 | 4 | 4 | 5 | | |

By the end of iteration 4, the main block (defined by the scheduling period parameter, i.e. four weeks in the present example) is completely filled by allocating processing time to all available capacity within this block. Now, the task's duration will be extended week by week, until all of the remaining processing time allocated.
Iteration 5:

Table 5F

| STB1 | STB2 | STB3 | STB4 | STB5 | STB6 |
|------|------|------|------|------|------|
| 6 | 4 | 4 | 5 | 4 | |

Iteration 6-13:

Table 5G

| STB1 | STB2 | STB3 | STB4 | STB5 | STB6 |
|------|------|------|------|------|------|
| 6 | 4 | 4 | 5 | 8 | |

At the end of the 13th iteration, the available capacity of the fifth week (STB5) has also been completely used, and there are still 5 hours of processing time which have not been allocated yet. This time is assigned to the sixth week (STB6) in iterations 14 to 16, as shown in Tables 5H to 5K.
Iteration 14:

Table 5H

| STB1 | STB2 | STB3 | STB4 | STB5 | STB6 |
|------|------|------|------|------|------|
| 6 | 4 | 4 | 5 | 8 | 4 |

Iteration 15:

Table 5I

| STB1 | STB2 | STB3 | STB4 | STB5 | STB6 |
|------|------|------|------|------|------|
| 6 | 4 | 4 | 5 | 8 | 4.5 |

Iteration 16:

Table 5K

| STB1 | STB2 | STB3 | STB4 | STB5 | STB6 |
|------|------|------|------|------|------|
| 6 | 4 | 4 | 5 | 8 | 5 |

Only after the 16th Iteration all of the processing time of this task is allocated. The task's duration has now become 6 weeks. This means that given the current load of this resource, it is able to finish the task in 6 weeks rather than the minimum number of 4 weeks defined in the scheduling period parameter.

If in the above example the available capacity in the third week was only 3 hrs then the new task would not be able to be scheduled until the fourth week as there would not have been enough consecutive weeks with the minimum capacity of 4 hrs available.

The available capacity of the resources will continue to be used as tasks are scheduled according to the process priority list and task priority list while testing a single combination from all combinations in the resource suitability set as described above.

In the following, the step of optimizing the schedule according to a preferred embodiment of the present invention is described in more detail.

Preferably, the processes are categorized into three possible groups:

1. Assessment processes: The assessment processes have an assessment parameter greater than zero.
2. Volume processes: The volume processes have a volume parameter greater than zero but either do not have an assessment parameter, or the assessment parameter is set to zero.

3. Other processes: The rest of the processes fall into the group "Other".

The benefit of optimizing the schedule for different groups of processes is different. For the assessment processes, the benefit of the processes are measured by the assessment parameter and the volume processes provide a benefit to the organization measured by the volume parameter, for instance. Therefore the score calculation for different process groups is preferably based on those parameters. The initial process rankings are preferably also based on those parameters similarly.

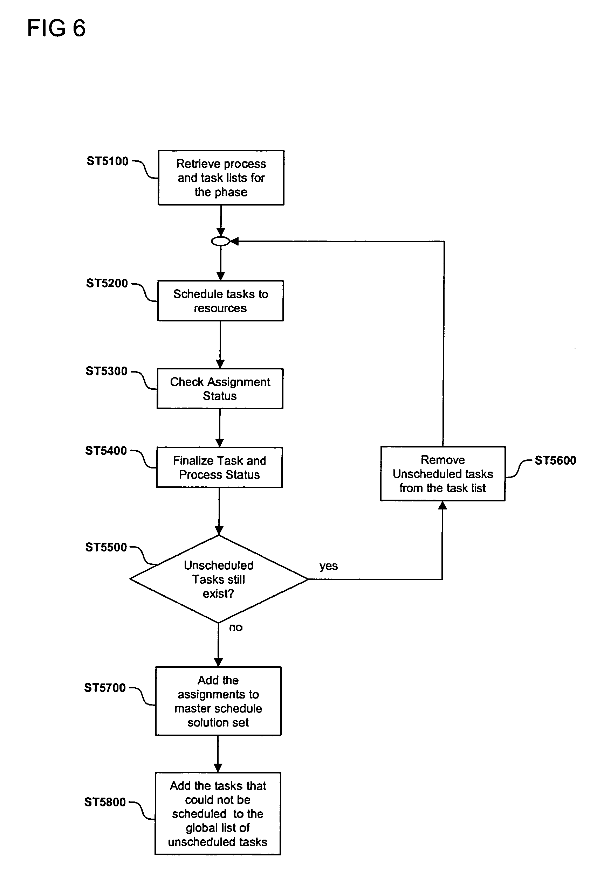

The scheduling algorithm preferably evaluates a score value for each process, once all of its tasks are assigned to a set of resources. The calculation of the score value is preferably different for each process depending on the process group defined above. For the assessment processes, the score value may be determined based on the internal weighting parameter and the elapsed time until the process is finished. For the volume processes, the score value may be determined based on the volume parameter and/or the internal volume parameter and the elapsed time until the process is finished. For the other type of processes, the score value may be determined based on the elapsed time until the process is finished, only. One ore more steps of this scheduling algorithm or at least some of its aspects according to a preferred embodiment of the present invention as described in the following may be at least partly implemented in a step ST5200 described in more detail in connection with **Figs. 6** and **7**, below.

The elapsed time until a process is completed is preferably defined as time interval from the current time when the evaluation is performed until the point in time when the process is planned to be finished according to the established scheduling.

The score value for the assessment processes is preferably calculated by dividing the internal weighting parameter by the time interval between the current point in time and the planned point in time for finishing the process. The score value for the volume processes is preferably calculated by dividing the volume parameter by the time interval between the current point in time and the planned point in time for finishing the process. For the other processes, the score value may be calculated as the reciprocal of the time interval between the current point in time and the planned point in time for finishing the process, for example.

Advantageously, dividing the assessment or the volume parameter to the elapsed time may be done to calculate a potential benefit provided to the organization per unit time. This provides a simple but yet powerful metric to evaluate the benefit of the optimization of the schedule. If based on the resource task assignments of the process it is going to take a long time to finish the process but in return it yields less profit to the organization by scheduling this process to finish earlier, this will be a less preferable resource assignment set. However, it may be more advantageous in the end for the profitability of the whole solution set, i.e. the cumulative benefit for scheduling all processes according to the resource assignment given in the scheduling set. Hence, the sums of the scores of all processes are compared with the result scores of the other resource-task assignment sets.

In the preferred example discussed in connection with Table 3, above, the solution set 122 has 12 possible resource-task assignment sets based on the defined task parameters and resource profiles. Table 6 shows all possible resource-task assignment sets (Opt 1 to Opt 12) that can occur. Preferably, a plurality of resource-task assignment sets, most preferably all possible resource-task assignment sets, together form the solution set 122, as shown in Table 6, for example.

Table 6

| Process ID | Task ID | Opt 1 | Opt 2 | Opt 3 | Opt 4 | Opt 5 | Opt 6 | Opt 7 | Opt 8 | Opt 9 | Opt 10 | Opt 11 | Opt 12 |
|---|---|---|---|---|---|---|---|---|---|---|---|---|---|
| 0100 | 0103 | R1 | R2 | R1 | R2 | R1 | R2 | R1 | R2 | R1 | R2 | R1 | R2 |
| 0100 | 0111 | R3 | R3 | R3 | R3 | R3 | R3 | R3 | R3 | R3 | R3 | R3 | R3 |
| 0100 | 0109 | R3 | R3 | R3 | R3 | R3 | R3 | R3 | R3 | R3 | R3 | R3 | R3 |
| 0100 | 0110 | R3 | R3 | R3 | R3 | R3 | R3 | R3 | R3 | R3 | R3 | R3 | R3 |
| 1200 | 1201 | R3 | R3 | R3 | R3 | R8 | R8 | R8 | R8 | R9 | R9 | R9 | R9 |
| 1200 | 1211 | R3 | R3 | R3 | R3 | R8 | R8 | R8 | R8 | R9 | R9 | R9 | R9 |
| 1200 | 1222 | R3 | R3 | R3 | R3 | R8 | R8 | R8 | R8 | R9 | R9 | R9 | R9 |
| 1400 | 1404 | R3 | R3 | R3 | R3 | R3 | R3 | R3 | R3 | R3 | R3 | R3 | R3 |
| 1400 | 1413 | R3 | R3 | R3 | R3 | R3 | R3 | R3 | R3 | R3 | R3 | R3 | R3 |
| 1500 | 1502 | R3 | R3 | R4 | R4 | R3 | R3 | R4 | R4 | R3 | R3 | R4 | R4 |

(continued)

| Process ID | Task ID | Opt 1 | Opt 2 | Opt 3 | Opt 4 | Opt 5 | Opt 6 | Opt 7 | Opt 8 | Opt 9 | Opt 10 | Opt 11 | Opt 12 |
|---|---|---|---|---|---|---|---|---|---|---|---|---|---|
| 1500 | 1505 | R3 | R3 | R4 | R4 | R3 | R3 | R4 | R4 | R3 | R3 | R4 | R4 |

For each of the processes within each resource-task assignment set, a schedule parameter is evaluated which in a preferred embodiment is based on the time interval between the current time when evaluating the schedule parameter and the point in time at which the respective process is planned to be finished according to the established resource-task assignment set (Opt 1 to Opt 12), i.e. according to the scheduling within the resource-task assignment set. In one preferred embodiment the schedule parameter represents said time interval. This time interval may be measured in months, weeks, days, hours, minutes, seconds, or any other appropriate unit of time.

Table 7 shows an example based on the solution set shown in Table 6, where the values indicated in Table 7 for each process within each resource-task assignment set (Opt 1, Opt 2, ..., Opt 12) preferably represent the point in time at which the respective process is planned to be finished according to the scheduling in the respective resource-task assignment set. In this example this point in time is given as a date. For example, in the first resource-task assignment set (Opt 1) process 0100 is scheduled to be finished on February 16th, while process 1500 is scheduled to be finished on March 6th. In the given example, the current time is assumed to be February 6th. Accordingly, the schedule parameter for a certain process (0100, 1200, 1400, 1500) within a certain resource-task assignment set (Opt 1, ... Opt 12) may be evaluated as the number of days between the current date (February 6th) and the scheduled finishing date for said process within said resource-task assignment set. As can be seen from Table 7, the schedule parameter of process 0100 for the first resource-task assignment set Opt 1 is 10 days or the value "10" or any value corresponding thereto.

Table 7

| Process ID | Opt 1 | Opt 2 | Opt 3 | Opt 4 | Opt 5 | Opt 6 | Opt 7 | Opt 8 | Opt 9 | Opt 10 | Opt 11 | Opt 12 |
|---|---|---|---|---|---|---|---|---|---|---|---|---|
| 0100 | 16-Feb | 13-Feb | 16-Feb | 13-Feb | 16-Feb | 13-Feb | 16-Feb | 13-Feb | 16-Feb | 13-Feb | 16-Feb | 13-Feb |
| 1200 | 22-Feb | 20-Feb | 22-Feb | 20-Feb | 14-Feb | 10-Feb | 14-Feb | 10-Feb | 17-Feb | 15-Feb | 17-Feb | 15-Feb |
| 1400 | 27-Feb | 24-Feb | 27-Feb | 24-Feb | 20-Feb | 17-Feb | 20-Feb | 17-Feb | 20-Feb | 17-Feb | 20-Feb | 17-Feb |
| 1500 | 06-Mar | 03-Mar | 14-Feb | 14-Feb | 27-Feb | 24-Feb | 14-Feb | 14-Feb | 27-Feb | 24-Feb | 14-Feb | 14-Feb |

Further, in a preferred embodiment a score value may be determined for each process as described in more detail below. Preferably, the score value may be determined by dividing for each process the weighting parameter of the process by the schedule parameter established for the individual resource assignments. Table 8 shows an example of such score values established for the plurality of processes and the plurality of resource-task assignment sets based on the schedule parameters preferably retrieved from the example described in connection with Table 7, above. For each process (0100, 1200, 1400, 1500) Table 8 shows the weighting parameter and a plurality of score values each of which has been established based on the weighting parameter assigned to the process and the schedule parameter determined for a particular resource-task assignment set. The weighting parameter for process 0100, for example, has a value "10000". With a schedule parameter of "10" defined for this process in the first resource-task assignment set Opt 1, this preferably results in a score value of 10000 / 10 = 1000, as indicated in Table 8.

Further, for each resource assignment a control parameter may be determined preferably by summing up the score values of all processes within each of the resource-task assignment sets and the resource-task assignment set having the largest control parameter may be selected. As indicated in Table 8, the control parameter for the first resource-task assignment set Opt 1 is "1068". Based on these control parameters the resource-task assignment set Opt 8 having the largest control parameter of "1689" may be selected among all established resource-task assignment sets, which together from the solution set. In a preferred embodiment for each different group of processes a separate control parameter may be determined.

Table 8

| Process ID | Weighting Parameter | Opt 1 | Opt 2 | Opt 3 | Opt 4 | Opt 5 | Opt 6 | Opt 7 | Opt 8 | Opt 9 | Opt 10 | Opt 11 | Opt 12 |
|---|---|---|---|---|---|---|---|---|---|---|---|---|---|
| 0100 | 10000 | 1000 | 1429 | 1000 | 1429 | 1000 | 1429 | 1000 | 1429 | 1000 | 1429 | 1000 | 1429 |
| 1200 | 1000 | 62.5 | 71.4 | 62.5 | 71.4 | 125 | 250 | 125 | 250 | 90.9 | 111.0 | 90.9 | 111.1 |
| 1400 | 100 | 4.76 | 5.56 | 4.76 | 5.56 | 7.14 | 9.09 | 7.14 | 9.09 | 7.14 | 9.09 | 7.14 | 9.09 |
| 1500 | 10 | 0.36 | 0.4 | 1.25 | 1.25 | 0.48 | 0.56 | 1.25 | 1.25 | 0.48 | 0.56 | 1.25 | 1.25 |
| **Control Parameter** | | **1068** | **1506** | **1069** | **1507** | **1133** | **1688** | **1133** | **1689** | **1099** | **1549** | **1099** | **1550** |

Preferably, the optimization of the schedule comprises three major optimization phases, with each major optimization phase comprising 3 minor phases. Each major optimization phase preferably optimizes a certain set of processes all having the same process status parameter. Scheduling preferably starts with scheduling the process having the status parameter representing an "In-Progress" status, and preferably continues with the "Firm" processes. Finally, the processes having "Early-Start", "Scheduled" and "Unscheduled" status are optimized. These three major phases according to a preferred embodiment are also described as steps ST5000, ST6000, and ST7000 in connection with **Fig. 5**, below.

Three minor phases based on the process groups are optimized within each major phase. Preferably, within each major phase processes are optimized in three minor phases based on the weighing parameter and/or the assessment parameter of the process. The 3 major optimization phases and 3 minor phases are listed below in the priority order which they are preferably run. All minor phases within a major optimization phase are preferably run before the next major optimization phase is run. For example, all processes with a status of 'In-progress' are preferably scheduled for assessment processes, volume processes and other processes before the next major optimization phase (i.e. All "Firm" processes) are run.

Preferably, before the optimization phases are stared the following process and/or task lists are established for the respective major optimization phase:

1. In-Progress process lists (for the first major optimization phase) may define and/or list:

   a) assessment processes that are in "In-Progress" status
   b) volume processes that are in "In-Progress" status
   c) other processes that are in "In-Progress" status

2. Firm process lists (for the second major optimization phase) may define and/or list:

   a) assessment processes that are in "Firm" status
   b) volume processes that are in "Firm" status
   c) other processes that are in "Firm" status

3. Phase III Project Lists (for the third major optimization phase) may define and/or list:

   a) assessment processes that are in "Early Start", "Scheduled" or "Unscheduled" status
   b) volume processes that are in "Early Start", "Scheduled" or "Unscheduled" status
   c) other processes that are in "Early Start", "Scheduled" or "Unscheduled" status

In the following, the first major optimization phase according to a preferred embodiment of the present invention is described in more detail. Preferably, "In-Progress" processes are scheduled in this phase. Since they have been already started, the scheduling algorithm tries to schedule them first to ensure continuity in the process execution. Preferably, this optimization phase does not try to find out the best "resource to task assignment" combinations, i.e. the best resource-task assignment set, but it preferably uses the previous resource-task assignment sets to add the tasks to the schedules of the resources. Preferably, the following steps are carried out for all process groups (assessment processes, volume processes and other processes):

   1.) Retrieve the task list preferably extracted for this phase as listed above;
   2.) Schedule the tasks to resources while keeping the assignments of tasks to resources;
   3.) Check an assignment status;
   4.) Perform post-scheduling settlement to finalize the task and process status;
   5.) Merge assignments with the results of the previous optimizations;
   6.) Copy the schedules of the resources from the solution set back to the main schedules.
   7.) Add the tasks that could not be assigned to the global list of unassigned tasks.

If a process and its tasks loose their scheduled status ("In-Progress", "Firm", "Early-Start" or "Scheduled", for example), due to a task in the process that could not be scheduled, all assignments for this process may be removed from the resource-task assignment set, for example. As a consequence the "balance" of the resource-task assignment set is changed, since there might be some other tasks that are added to the schedules of the resources after those tasks have been scheduled that have been subsequently removed. If the scheduling algorithm just removes the assignments from the schedules of the resources, this causes gaps in the schedules of the resources and, therefore, reduces the utilization of the resources. Therefore, as long as some tasks are de-assigned due to some other tasks in the same process that could not be scheduled, the optimization may be re-run until no more de-assignments are necessary, for example.

Accordingly, the first processes that will go in the schedules are the ones in "In-Progress" status, since they have been already started, the scheduling algorithm tries to schedule them first to ensure continuity in the project. The first major optimization phase preferably inserts the tasks to the schedules of the resources that have already been assigned and are currently working on the task. Since the processes are in progress, the scheduling engine does not change any assignments for the In-Progress processes, this includes all tasks within a project that is 'In-progress' but have not yet started (i.e. tasks with a status of Firm for an In-Progress process).

In the following, the second major optimization phase according to a preferred embodiment is described in more detail. Preferably, the second major optimization phase optimizes the "Firm" processes. Preferably, the assignments of tasks to resource have not yet been fixed for these processes, which means they will be re-optimized. Since the process status is "Firm", it will always keep its status even if the process falls out of a "Firm" zone, which is a given period of time after the scheduling run preferably defined in the firm period duration parameter. It is advantageous to reoptimize the task-resource assignments of these processes because due to the work load caused by the In-Progress processes, the previous set of resources assigned to the Firm processes might not be able to start working on the "Firm" processes on time. In this case, it is worth to try out some new combinations to see whether there is a resource-task combination that could deliver a Firm process earlier.

Preferably, the following steps are carried out for all process groups (assessment processes, volume processes and other processes):

1.) Retrieve the task list preferably extracted for this phase as listed above;
2.) Schedule the tasks to resources to try all task resource assignment combinations, i.e. all resource-task assignment sets
3.) Check the assignment status;
4.) Perform post-scheduling settlement to finalize the task and process status;
5.) Merge assignments with the results of the previous optimizations;
6.) Copy the schedules of the resources from the solution set back to main schedules;
7.) Add the tasks that could not be assigned to the global list of unassigned tasks.

When scheduling processes with a status of 'Firm', all tasks within the processes are re-optimized and may be assigned a new resource combination if this provides a more optimum solution based on available resource capacity. Once a process has a status of "Firm" it will continue to retain this status regardless of where the process is scheduled in the future.

In the following, the third major optimization phase according to a preferred embodiment is described in more detail. Preferably, the third major optimization phase optimizes the rest of the processes, which preferably have "Early Start", "Scheduled" and/or "Unscheduled". If a process has the "Early-Start" status, this means that one or more tasks within a process have been started earlier than it was expected which is not earlier than the end of the "Firm" period. Processes having a "Scheduled" status preferably have been actually scheduled in the previous schedule run. However, they are not supposed to be started within the firm period. "Unscheduled" processes are generally the processes that have been newly set up. Since they are preferably the newest processes among the others, they will preferably be scheduled as last together with the "Early Start" and "Scheduled" processes.

Preferably, the following steps are carried out for all process groups (assessment processes, volume processes and other processes):

1.) Retrieve the task list preferably extracted for this phase as listed above;
2.) Schedule the tasks to resources to try all task resource assignment combinations, i.e. all resource-task assignment sets;
3.) Check the assignment status;
4.) Perform post-scheduling settlement to finalize the task and process status;
5.) Merge assignments with the results of the previous optimizations;
6.) Copy the schedules of the resources from the solution set back to main schedules;
7.) Add the tasks that could not be assigned to the global list of unassigned tasks.

In the following, the minor optimization phases (or minor scheduling phases) according to a preferred embodiment of the present invention are described in more detail. Preferably, each of the 3 major optimization phases (or major scheduling phases) comprises 3 minor optimization phases. These minor optimization phases preferably ensure that priority is given to processes in the following order within each of the 3 major optimization phases (or major scheduling phase):

1. assessment processes (Sub-Phase a) - This represents all processes within a major scheduling phase that have an weighting parameter greater than zero.

2. volume processes (Sub-Phase b) - This represents all processes within a major scheduling phase that have a weighting parameter = 0 and a volume parameter greater than 0.

3. Other processes (Sub-Phase c) - This represents all processes within a major scheduling phase that have a weighting parameter = 0 and a volume parameter = 0.

In the following, a step of post-scheduling settlement according a preferred embodiment of the present invention is described in more detail, which preferably comprises re-optimizing the schedule after tasks have been removed from the schedule. This step preferably comprises re-optimizing the schedule for "Unscheduled" processes. Preferably, the step of post-scheduling settlement is comprised in the step of optimizing the schedule. If a single task within a process cannot be scheduled to a resource, as a scheduling rule, the assignments of the other tasks within the same process preferably become invalid. If a task in a process cannot be scheduled, the whole process cannot be finished. This step of post-scheduling settlement or at least some of its aspects according to a preferred embodiment of the present invention as described in the following may be at least partly implemented in the steps ST5500 and/or ST5600 described in more detail in connection with **Fig. 6**, below.

Preferably, a task will not be assigned to a resource, if

- there is no resource available in the preferred location, which has the required available resource capacity; and/or if
- there is no resource available in the preferred location, which has the required capability of perform that task depending on the task category, for example; and/or if
- the schedules of all of the suitable resources are full within a certain advance planning time.

If a process and its tasks loose their scheduled status ("In-Progress", "Firm", "Early-Start" or "Scheduled", for example), due to a task in the process that could not be scheduled, preferably all assignments for this process are removed from the solution set. As a consequence the "balance" of the solution set is changed, since there might be some other tasks that are added to the schedules of the resources after those tasks have been scheduled that have been subsequently removed. If the scheduling algorithm just removes the assignments from the schedules of the resources, this causes gaps in the schedules of the resources and, therefore, reduces the utilization of the resources. Therefore, as long as some tasks are de-assigned due to some other tasks in the same process that could not be scheduled, the optimization is preferably re-run until no more de-assignments are necessary.

A method in accordance with another preferred embodiment of the present invention is described with reference to **Figs. 5** to **7** in the following. This method may comprise one or more of the following step, preferably in the order indicated in **Figs. 5** to **7**:

- A step ST1000 of determining completed tasks and processes; and/or
- a step ST2000 of building prioritized process and task lists; and/or
- a step ST3000 of reflecting actual hours to tasks; and/or
- a step ST4000 of processing "On-Hold"-tasks and reflecting reported actual hours to them; and/or
- a step ST5000 of scheduling "In-Progress" processes (Phase I); and/or
- a step ST6000 of scheduling "Firm" processes (Phase II); and/or
- a step ST7000 of scheduling "Unscheduled", "Scheduled", and "Early Start" processes (Phase III); and/or
- a step ST8000 of saving the selected resource-task assignment set to a database, such as the database 100 or 110, for example; and/or
- a step ST9000 of displaying results.

It should be noted in this connection that the above enumeration of the method steps is not necessarily identical to the chronological order of these steps, though it would be preferred to carry out the steps in the listed order. These steps according to a preferred embodiment of the present invention are described in more detail in the following:

Preferably, in step ST1000 of determining completed tasks and processes for each process in a list of active processes, the underlying tasks are checked one by one to determine whether there are any tasks that are marked as being completed. Preferably, if a task is found to be completed, its status is set to the value "Completed" or a value corresponding thereto.

The set ST2000 of building prioritized process and task lists preferably comprises the step of setting up and/or retrieving priority lists for the processes and tasks as described above in connection with **Figs. 4A** and **4B** and in connection with Tables 2A, 2B, and 2C, for example.

In step ST3000 of reflecting actual hours to tasks, preferably task report data as described above may be received and/or processed as also discussed in more detail in connection with a preferred embodiment of the present invention, above.

Preferably, in the step ST4000 of processing "On-Hold"-tasks and reflecting reported actual hours to them, the tasks which have "On-Hold" status are analyzed. If the task restart parameter of a task that has been put on-hold is set to "Indefinite", this means that this task cannot be restarted and will continue to have the same status. For the on-hold tasks, which do have a restart time parameter equal to or greater than the schedule start time parameter, the requested start parameter for those tasks will be set to the restart time parameter and they will be included in the scheduling with the status parameters they did possess prior to being put on-hold. The on-hold tasks which are processed by the scheduling algorithm will continue to appear as "On-Hold", although they are included in the schedule and assigned to resources. It is possible that for a task which is put on-hold, a resource might have commenced the task and worked on it, therefore, the remaining hours for the task may need to be adjusted by considering the actual hours worked on the task prior to being put on-hold.

In a preferred embodiment of the present invention the step ST5000 of scheduling "In-Progress" processes (Phase I), the step ST6000 of scheduling "Firm" processes (Phase II), and the step ST7000 of scheduling "Unscheduled", "Scheduled", and "Early Start" processes (Phase III) each corresponds to one of the three major optimization phases according to an optimization of the schedule described above, respectively.

Preferably, the step ST5000 of scheduling "In-Progress" processes comprises one or more of the following steps:

- the step of setting up and/or retrieving priority lists for processes and tasks, preferably for processes and tasks that are going to be processed as part of the current scheduling phase, as described in detail above; and/or
- the step of identifying a resource suitability set, as described in detail above; and/or
- the step of scheduling tasks to available resource capacities as described in detail above; and/or
- the step of optimizing the schedule, as described in detail above; and/or
- the step of updating the process status parameter and/or the task status parameter, as described in detail above.

With reference to **Fig. 6,** the step ST5000 of scheduling "In-Progress" processes may alternatively comprise one or more of the following steps:

- a step ST5100 of retrieving process and task lists for the current phase; and/or
- a step ST5200 of scheduling tasks to resources; and/or
- a step ST5300 of checking assignment status; and/or
- a step ST5400 of finalizing task and process status; and/or
- a step ST5600 of Post Scheduling Settlement; and/or
- a step ST5700 of adding assignments to a master schedule solution set; and/or
- a step ST5800 of add a task that could not be scheduled to a global list of unscheduled tasks.

Although the above enumeration of the method steps is not necessarily identical to the chronological order of these steps, it would be preferred to carry out the steps in the listed order. These steps according to a preferred embodiment of the present invention are described in more detail in the following:

Preferably, in the step ST5100 of retrieving process and task lists for the current phase, all processes that are going to be scheduled within the current phase will be retrieved from the database. Following the processes, their tasks will be retrieved from the database and inserted into a task priority list according to the priority ranking of the enclosing processes.

The step ST5200 of scheduling tasks to resources according to a preferred embodiment of the present invention is explained in connection with Tables 6, 7, and 8, above.

In the step ST5300 of checking assignment status preferably the status of the tasks according to their scheduled start times is checked. Preferably, in the step ST5300 of checking assignment status the task status parameters are determined as described in connection with a preferred embodiment, above. In a preferred embodiment, in the step ST5300 of checking assignment status, for each process the process status parameter is updated based on task status parameters (Task_Status) of the tasks comprised in the process as described in detail, above.

In the step ST5400 of finalizing task and process status, preferably the process status is determined based on the task assignments.

The step ST5600 of Post Scheduling Settlement preferably comprises a step ST5500 of determining whether unscheduled tasks still exist and a step ST5600 of removing unscheduled tasks from the task list. The step ST5600 of Post Scheduling Settlement preferably comprises the step of post-scheduling settlement as described above in connection with a preferred embodiment of the present invention.

Preferably, in the step ST5700 of adding assignments to a master schedule solution set comprises a step of adding the finalized task assignments, preferably the finalized resource-task assignment sets, for the current phase to a master schedule solution set which comprises the task assignments, i.e. the resource-task assignment sets, of all phases.

Preferably, in the step ST9000 of displaying results, the results of the scheduling algorithm together with the metrics showing the overall benefit of the optimization will be displayed to the user. Additionally, the resource assignments for each task, the process delivery dates, and hourly, daily, or weekly assignment planning, for example, for each task are made visible to the user.

With reference to **Fig. 7**, the step ST5200 of scheduling tasks to resources preferably comprises one or more of the following steps:

- a step ST521 0 of identifying the resource suitability set; and/or
- a step ST5220 of determining the a solution set, where the solution set preferably comprises a plurality of resource-task assignment sets, most preferably all different resource-task assignment set that are possible for the identified resource suitability set; and/or
- a step ST5230 of selecting the first resource-task assignment set within the solution set as a current resource-task assignment set; and/or
- a step ST5231 of selecting the next resource-task assignment set within the solution set as the current resource-task assignment set; and/or
- a step ST5240 of validating the current resource-task assignment set; and/or
- a step ST5245 of determining whether the current resource-task assignment set is the last resource-task assignment set within the solution set; and/or
- a step ST5250 of selecting the first task-resource assignment within the current resource-task assignment set as the current task-resource assignment; and/or
- a step ST5251 of selecting the next task-resource assignment within the current resource-task assignment set as the current task-resource assignment; and/or
- a step ST5260 of scheduling the task to the resource according to the current task-resource assignment; and/or
- a step ST5265 of determining whether the task defined in the current task-resource assignment is the last task within a process; and/or
- a step ST5270 of evaluating the score value for the process and adding said score value to the control parameter of the current resource-task assignment set; and/or
- a step ST5275 of determining whether the current task-resource assignment is the last task-resource assignment within the current resource-task assignment set; and/or
- a step ST5280 of determining whether the control parameter of the current resource-task assignment set is greater than a stored maximum control parameter; and/or
- a step ST5290 of storing the current resource-task assignment set as the optimum resource-task assignment set and storing the control parameter of the current resource-task assignment set as the maximum control parameter.

In the step ST5210 of determining the resource suitability set preferably the set of suitable resources for each task is determined. The step ST5210 of determining the resource suitability set according to a preferred embodiment is described above with reference to Table 3, for example.

The step ST5231 of selecting the next resource-task assignment set within the solution set as the current resource-task assignment set is preferably performed if the current resource-task assignment set is determined as not being the last resource-task assignment set within the solution set in the step ST5245.

In step ST5240 the current resource-task assignment set is validated according to bundle constraints. Preferably, the assignment of some bundled tasks within the resource-task assignment set may already be fixed, since the tasks have "In-Progress" status. Therefore, other tasks that belong to the same bundle should be assigned to the same resource. Preferably, this step ST5240 verifies whether the combination which is generated by the algorithm conforms to such bundle constraints. If the resource-task assignment set is determined to be not valid in step ST5240, the method preferable proceeds to step ST5245, as indicated in **Fig. 7**. Otherwise, i.e. if the current resource-task assignment set is determined to be valid in accordance to the bundle constraints, the method preferably proceeds to step ST5250 of selecting the first task-resource assignment within the current resource-task assignment set.

The step ST5251 of selecting the next task-resource assignment within the current resource-task assignment set as the current task-resource assignment is preferably performed if the current task-resource assignment is determined to be not the last task-resource assignment within the current resource-task assignment set in the step ST5275.

The step ST5260 of scheduling the task to the resource according to **Fig. 7** preferably comprises a step of scheduling task to available resource capacities as described with reference to Tables 4 and 5, above, in connection with a preferred embodiment of the present invention.

The step ST5270 of evaluating the score value for the process and adding said score value to the control parameter of the current resource-task assignment set is preferably performed if in step ST5265 the task defined in the current task-resource assignment is determined to be the last task within the process which the said task belongs to. If in step ST5265 the task defined in the current task-resource assignment is determined not to be the last task within the process which the said task belongs to, than the method preferably proceeds to step ST5275 of determining whether the current task-resource assignment is the last task-resource assignment within the current resource-task assignment set. If the current task-resource assignment is the last task-resource assignment within the current resource-task assignment set, the method preferably proceeds to step ST5280 of determining whether the control parameter of the current resource-task assignment set is greater than a stored maximum control parameter. If this is the case, then the method preferably proceeds to step ST5290. Otherwise, i.e. in case in step ST5280 the control parameter of the current resource-task assignment set is determined not to be greater than the stored maximum control parameter, the method preferably directly proceeds to step ST5245 as indicated in **Fig. 7**.

The steps ST6000 of scheduling "Firm" processes (Phase II) and ST7000 of scheduling "Unscheduled", "Scheduled", and "Early Start" processes (Phase III) and preferably performed analogous to the step ST5000 of scheduling "In-Progress" processes (Phase I), i.e. details described for step ST5000 in connection with **Figs. 5** to **7** preferably apply to the steps ST6000 and ST7000 also.

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory (ROM) or a random access memory (RAM) or both. The basic elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of (mono-, bi- or multi-directional) communication networks include a local area network ("LAN"), a wireless local area network (WLAN) and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Even though some details of the preferred embodiments of the present invention are described independently, they are not limited to different embodiment but may be combined to new preferred embodiments. In particular, the details described in connection with different figures, tables and process implementations may be combined with each other in one embodiment.

**Claims**

1. Computer-implemented method for allocating processes (118) to a plurality of resources (106), the method comprising the steps of:

   - receiving a process specification defining a plurality of processes (118), each process having a weighting parameter (102) and comprising at least one task belonging to a task category;
   - analyzing an available resource capacity (104) for each of a plurality of resources (106), each of which is capable of performing tasks within at least one task category;
   - establishing a first resource-task assignment set (112) defining an assignment of the plurality of tasks to the plurality of resources (106) depending on the task categories, where the first resource-task assignment set (112) defines a first scheduling of the tasks depending on the available resource capacities (104), and evaluating for each of the processes a first schedule parameter (114) depending on the established scheduling of the tasks belonging to the respective process;
   - establishing at least one further resource-task assignment set (112', 112") defining an assignment of the plurality of tasks to the plurality of resources (106) depending on the task categories, where the at least one further resource-task assignment set (112', 112") defines at least one further scheduling of the tasks depending on the available resource capacities (104), and evaluating for each of the processes at least one further schedule parameter (114) depending on the established scheduling of the tasks belonging to the respective process;
   - evaluating a control parameter (116) for each of the established resource-task assignment sets (112) depending on the weighting parameters (102) and the schedule parameters (114);
   - selecting one of the established resource-task assignment sets (112, 112', 112") depending on a selection criterion for the control parameter (116); and
   - allocating the tasks to the resources (106) according to the selected resource-task assignment set (112).

2. Method of claim 1, wherein the process specification comprises for at least one task a capacity requirement parameter defining a required resource capacity for carrying out the task and a time frame parameter defining a predetermined period of time required for carrying out the task and where in the steps of establishing a resource-task assignment set the tasks are scheduled depending on the task capacity requirement parameter and the time frame parameter.

3. Method of claim 2, wherein the time frame parameter defines a plurality of time frame periods within each of which a minimum portion of a total processing time is carried out.

4. Method of anyone of the preceding claims, wherein receiving a process specification comprises receiving for each process a process volume parameter and an efficiency parameter, wherein the method further comprises a step of evaluating the weighting parameter for each of the processes based on the process volume parameter and the efficiency parameter.

5. Method of anyone of the preceding claims, wherein the method further comprises:

   - ordering the processes depending on the weighting parameter;
   - assigning to each process a ranking parameter depending on the ordering;
   - receiving for at least one selected process a modification of the ranking parameter;
   - modifying the weighting parameter of the selected process depending on the weighting parameter of at least one other process.

6. Method of anyone of the preceding claims, wherein the received process specification comprises for at least one of the tasks a dependency parameter defining a dependency of this task on at least one other task within the same process.

7. Method of anyone of the preceding claims, wherein the schedule parameter is evaluated based on the scheduled ending time for the last task within each process and/or the starting time for the first task within each process.

8. Method of anyone of the preceding claims, wherein evaluating a control parameter for an established resource-task assignment set comprises:

   - evaluating for each of the processes scheduled in the resource-task assignment set a process assessment value depending on the schedule parameter and the weighting parameter assigned to the process, and

- summing up the process assessment values of all processes scheduled in the resource-task assignment set.

9. Method of anyone of the preceding claims, further comprising steps of establishing a first resource ordering (108) and a second resource ordering (108') different from the first resource ordering, and wherein the step of establishing the first resource-task assignment set comprises successively assigning the tasks to the resources following the first resource ordering, and the step of establishing the at least one further resource-task assignment set comprises successively assigning the tasks to the resources following the second resource ordering.

10. Method of anyone of the preceding claims, further comprising controlling the operation of at least part of the resources according to the scheduling of the tasks in the selected resource-task assignment set.

11. Computer-program product comprising program code which when loaded in a computer system causes the computer system to perform operations according to a method of anyone of the preceding claims.

12. System for allocating processes to a plurality of resources, the system comprising:

- a process specification interface for receiving a process specification that defines a plurality of processes (118), each process having a weighting parameter (102) and comprising at least one task belonging to a task category;
- a capacity analysis module for analyzing an available resource capacity (104) for each of a plurality of resources (106) each of which is capable of performing tasks within at least one task category;
- a resource assignment module for establishing at least a first and a second resource-task assignment set (112, 112') each defining an assignment of the plurality of tasks to the plurality of resources (106) depending on the task categories, where the first resource-task assignment set defines a first scheduling of the tasks depending on the available resource capacities and the second resource-task assignment set defines a second scheduling of the tasks depending on the available resource capacities;
- a schedule evaluation module for evaluating for each process

-- a first schedule parameter (114) depending on the first established scheduling of the tasks belonging to the respective process; and
-- a second schedule parameter (114) depending on the second established scheduling of the tasks belonging to the respective process;

- a control module evaluating a control parameter (116) for each of the established resource-task assignment sets (112, 112') depending on the weighting parameters (102) and the schedule parameters (114);
- a selection module for selecting one of the established resource-task assignment sets (112, 112') depending on a selection criterion for the control parameter (116); and
- an allocation module for allocating the tasks to the resources (106) according to the selected resource-task assignment set (112).

13. System of claim 12, further comprising a time entry module for receiving hours and/or Estimated Date of Completions and/or Estimated Time of Completion from at least one resource, preferably from a plurality of resources.

14. System of claim 12 or 13, which is capable of performing a method of anyone of the claims 1 to 10.

FIG 1

## FIG 2

# FIG 3

initialize
scheduling — ST20

ordering
resources — ST21

start with
first process — ST22

ST23 — analyse tasks
in process

database — 110

select
first task — ST24

analyze available
resource capacity — ST25

solution
set — 122

108  108'  108"

resource
ordering

change
resource
ordering

ST26 — assign task
to resource

112"
112'
112

ST34

select
next task | yes

further
task
? — ST27

ST28

no

evaluate
process
scheduling — ST29

102

schedule
parameters

weighting
parameters

114

select
next process | yes

further
process
? — ST30

evaluate
assignement — ST32

ST31

no

control
parameter — 116

ST33 — scheduling
completed
?

yes

allocatate
processes — ST35

no

processes

120

resources — 106

118

# FIG 4A

# FIG 4B

# FIG 5

ST1000 — Determine Completed tasks & Processes

ST2000 — Build Prioritized Process & Task List

ST3000 — Reflect actual hours to Tasks

ST4000 — Process On-Hold Tasks and reflect actual hours

ST5000 — Phase I Schedule "In-Progress" processes

ST6000 — Phase II Schedule "Firm" Processes

ST7000 — Phase III Schedule "Unscheduled", "Scheduled", and "Early Start" Processes

ST8000 — Save optimum resource-task assignment set

database

ST9000 — Display results

End

## FIG 6

ST5100 — Retrieve process and task lists for the phase

ST5200 — Schedule tasks to resources

ST5300 — Check Assignment Status

ST5400 — Finalize Task and Process Status

Remove Unscheduled tasks from the task list — ST5600

ST5500 — Unscheduled Tasks still exist?

yes

no

ST5700 — Add the assignments to master schedule solution set

ST5800 — Add the tasks that could not be scheduled to the global list of unscheduled tasks

# FIG 7

**EP 1 887 498 A1**

European Patent Office

**EUROPEAN SEARCH REPORT**

Application Number

EP 06 01 5914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 826 236 A1 (NARIMATSU KATSUMI [JP] ET AL) 20 October 1998 (1998-10-20) * abstract * | 1-14 | INV. G06Q10/00 |
| X | US 5 233 533 A1 (EDSTROM NILS O [US] ET AL) 3 August 1993 (1993-08-03) * abstract * * column 15, line 66 - column 16, line 9 * | 1-14 | |
| X | US 5 408 663 A1 (MILLER HAROLD R [CA]) 18 April 1995 (1995-04-18) * abstract * | 1-14 | |
| X | GB 2 194 086 A (HITACHI LTD) 24 February 1988 (1988-02-24) * abstract * * page 1, lines 60-64 * * page 2, lines 36-40 * | 1-14 | |

TECHNICAL FIELDS SEARCHED (IPC)

G05B
G06Q

The present search report has been drawn up for all claims

| Place of search | Date of completion of the search | Examiner |
|---|---|---|
| Munich | 26 March 2007 | Gabriel, Christiaan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 887 498 A1

## ANNEX TO THE EUROPEAN SEARCH REPORT
## ON EUROPEAN PATENT APPLICATION NO.

EP 06 01 5914

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2007

| Patent document cited in search report | | Publication date | Patent family member(s) | | Publication date |
|---|---|---|---|---|---|
| US 5826236 | A1 | | NONE | | |
| US 5233533 | A1 | | NONE | | |
| US 5408663 | A1 | | NONE | | |
| GB 2194086 | A | 24-02-1988 | JP | 2533495 B2 | 11-09-1996 |
| | | | JP | 63034056 A | 13-02-1988 |
| | | | US | 4852001 A | 25-07-1989 |

EPO FORM P0459

For more details about this annex : see Official Journal of the European Patent Office, No. 12/82

48